# FASCICULE DE BREVET EUROPEEN

(11) **EP 3 865 532 B1**
(45) Date de publication et mention de la délivrance du brevet: **24.08.2022**
(21) Numéro de dépôt: 21156746.6
(22) Date de dépôt: 12.02.2021
(51) Int. Cl.: C08G 81/02, C08G 63/08, H01M 10/0565, H01M 10/052, C08G 64/02, C08G 64/18

(54) **POLYMERE EN PEIGNE**
KAMMPOLYMER
COMB POLYMER

(30) Priorité: 14.02.2020 FR 2001490
(43) Date de publication de la demande: 18.08.2021
(73) Titulaire: Commissariat à l'Energie Atomique et aux Energies Alternatives, 75015 Paris (FR); Université Grenoble Alpes, 38400 Saint-Martin-d'Hères (FR); Centre national de la recherche scientifique, 75016 Paris (FR)
(72) Inventeur: PICARD, Lionel, 38054 Grenoble, Cedex 9 (FR); CLEMENT, Thomas, 38054 Grenoble, Cedex 9 (FR); RANNOU, Patrice, 38054 Grenoble, Cedex 9 (FR)
(74) Mandataire: Nony

(56) Documents cités:
- EP-A1- 0 037 776
- WO-A1-2019/053388
- TAO CAI ET AL: "Preparation of jellyfish-shaped amphiphilic block-graft copolymers consisting of a poly([epsilon]-caprolactone)-block-poly(pe ntafluorostyrene) ring and poly(ethylene glycol) lateral brushes", POLYMER CHEMISTRY, vol. 3, no. 4, 1 janvier 2012 (2012-01-01) , page 1061, XP055739554, ISSN: 1759-9954, DOI: 10.1039/c2py00609j
- MINDEMARK JONAS ET AL: "High-performance solid polymer electrolytes for lithium batteries operational at ambient temperature", JOURNAL OF POWER SOURCES, ELSEVIER SA, CH, vol. 298, 24 août 2015 (2015-08-24), pages 166-170, XP029272484, ISSN: 0378-7753, DOI: 10.1016/J.JPOWSOUR.2015.08.035
- HYEONGRAE CHO ET AL: "Novel Anion Exchange Membrane Based on Poly(Pentafluorostyrene) Substituted with Mercaptotetrazole Pendant Groups and Its Blend with Polybenzimidazole for Vanadium Redox Flow Battery Applications", POLYMERS, vol. 12, no. 4, 1 janvier 2020 (2020-01-01), page 915, XP055739536, CH ISSN: 2073-4360, DOI: 10.3390/polym12040915

## Description

### Domaine technique

La présente invention se rapporte à un nouveau polymère en peigne, ainsi qu'à sa méthode de préparation.

De tels polymères en peigne peuvent être mis en œuvre, en combinaison avec un sel de métal alcalin ou alcalino-terreux, pour former un électrolyte polymérique solide, en particulier pour un système ou dispositif électrochimique, notamment pour une batterie au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative.

D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

D'une manière générale, les électrolytes des systèmes électrochimiques se présentent sous forme liquide, gélifiée ou solide.

En ce qui concerne les électrolytes sous forme liquide, les électrolytes conventionnels de générateurs électrochimiques avec un cation métallique de l'une des deux premières colonnes du tableau périodique des éléments, par exemple au lithium, sont composés d'un sel de ce cation dissous dans un milieu organique ou aqueux (classiquement dans des solvants carbonates, acétonitrile pour les batteries au lithium), en présence ou non d'additifs. Par exemple, les électrolytes conventionnels de supercapacité sont composés d'un sel organique (classiquement un sel de tétraéthylammonium tétrafluoroborate Et4N-BF4) dissous dans de l'acétonitrile.

Leur utilisation en système complet de stockage électrochimique, par exemple dans une batterie Li-ion, nécessite toutefois d'ajouter un séparateur pour assurer une isolation électrique entre les électrodes positive et négative. Également, même si ces électrolytes présentent de bonnes conductivités ioniques, ils posent toutefois des problèmes de sécurité et de coût dans le cadre de la mise en œuvre de solvants organiques (stabilité thermique faible), et de stabilité électrochimique dans le cadre de la mise en œuvre d'un milieu aqueux. Concernant les électrolytes gélifiés, il s'agit d'électrolytes liquides, par exemple tels que décrits précédemment, emprisonnés dans un polymère « hôte ». Le ou les solvants de l'électrolyte liquide doivent présenter une affinité avec le polymère hôte, ni trop élevée (solubilisation du polymère), ni trop faible (exsudation). Le polymère hôte doit permettre une incorporation maximale de liquide tout en conservant des propriétés mécaniques pour garantir la séparation physique entre les deux électrodes.

Enfin, pour répondre aux problématiques de sécurité liées à la présence du solvant, il a été proposé de mettre en œuvre des électrolytes polymères solides, exempts de solvant. Ces polymères entrant dans la composition de l'électrolyte doivent présenter de bonnes propriétés de conduction ionique afin de pouvoir être utilisés de façon satisfaisante dans des systèmes générateurs et de stockage électrochimiques.

Les électrolytes polymères les plus répandus pour des dispositifs électrochimiques au lithium sont à base de polyéther, et plus particulièrement de poly(oxyéthylène) (POE), dans lesquels est dissous un sel de métal alcalin ou alcalino-terreux (suivant la chimie des électrodes). Toutefois, ces électrolytes présentent des performances limitées en matière de conductivité ionique (< 0,1 mS.cm⁻¹) et de stabilité électrochimique (environ 4V *vs*. Li/Li⁺) à des températures inférieures à 60°C en raison de la cristallisation du polymère. Ils nécessitent donc une température d'utilisation élevée (60 °C à 80 °C) et sont ainsi conducteurs dans un état physique fondu.

Différentes études ont été menées en vue d'améliorer les performances de conduction ionique des électrolytes polymériques. Ainsi, il a été proposé des électrolytes polymériques à base de poly(triméthylène carbonate) (PTMC). Le PTMC présente une meilleure conductivité et une bonne stabilité électrochimique (jusqu'à 5V *vs.* Li/Li⁺), sans pertes de performances dues à une cristallisation aux températures d'usage. Toutefois, ces polymères présentent des performances mécaniques limités.

Afin de pallier ces limitations, il a été proposé de synthétiser des copolymères comportant un bloc rigide, apportant des propriétés mécaniques adaptées à leur usage en tant qu'électrolyte, et un bloc conducteur ionique.

Par exemple, Bates *et al.* [2] décrivent un électrolyte formé d'un polymère en peigne tribloc A-B-A, dont la chaîne principale est un polynorbornène, les blocs A et B étant respectivement formés d'unités norbornènes greffées par du polystyrène et du POE. Ces polymères permettent d'atteindre une conductivité ionique de l'ordre 10⁻³ S/cm à 105°C. En revanche, la fonction triazacyclopentène, connectant le polystyrène au norbornène, limite intrinsèquement la stabilité électrochimique de l'électrolyte pour des différences de potentiel élevées.

On peut encore citer la publication Li *et al.* [3] qui propose une architecture ayant un squelette de poly(*tert*-butyl 2-((2-bromopropionyloxy)méthyl)acrylate) (PtBBMA) et une chaine pendante poly(éthylène glycol)méthyl éther méthacrylate (PEGMA). Cependant, les chaines acrylates posent également un problème de stabilité électrochimique.

Ainsi, l'amélioration des performances des électrolytes à base de polymères conducteurs ioniques relève d'un objectif permanent.

### Résumé de l'invention

La présente invention vise précisément à proposer de nouveaux polymères pouvant avantageusement être mis en œuvre pour former des électrolytes polymériques solides. Plus particulièrement, elle concerne, selon un premier de ses aspects, un polymère en peigne comprenant une chaîne principale formée à partir de monomères 1-éthényl- et/ou 1-allyl-2,3,4,5,6-pentafluorobenzène et des chaînes latérales polymériques greffées *en para* des groupes pentafluorophényle, dans lequel lesdites chaînes polymériques latérales sont liées à ladite chaîne principale par un atome d'oxygène, le taux de greffage molaire en chaînes latérales polymériques étant supérieur ou égal à 50%.

Dans la suite du texte, on désigne plus simplement par chaîne principale (ou polymère) « de type PPFS », une chaîne polymérique (ou polymère) formé(e) à partir de monomères 1-éthényl- et/ou 1-allyl-2,3,4,5,6-pentafluorobenzène.

Comme détaillé plus particulièrement dans la suite du texte, les chaînes latérales polymériques peuvent être plus particulièrement des chaînes à base de polymères solvants de sels de métal alcalin ou alcalino-terreux, dits encore polymères « solvatants ».

Plus particulièrement, les chaînes latérales polymériques peuvent être de type polyalkylène glycol, en particulier de type poly(oxyde d'éthylène) (noté POE ou PEO).

Il peut encore s'agir d'un polymère en peigne présentant des chaînes latérales polymériques formées à partir d'au moins un monomère cyclique choisi parmi les lactones et les carbonates cycliques de cinq à huit chaînons, en particulier des chaînes latérales de type poly(triméthylène carbonate) (PTMC) ou poly(ε-caprolactone) (PCL).

Des polymères en peigne dont l'architecture présente une chaîne de type PPFS porteuse de chaînes latérales, ont déjà été synthétisés. Par exemple, Ott *et al.* [5] décrivent la modification d'un polymère poly(2,3,4,5,6-pentafluorostyrène) de faible masse moléculaire en poids, par des chaînes polyéthylène glycol présentant en bout de chaîne une fonction amine. Le greffage du POE conduit à des chaînes latérales liées à la chaîne principale de type PPFS par des fonctions amine.

Également, Cai *et al.* [6] décrivent la synthèse d'un copolymère à bloc greffé PCL-b-(PPFS-g-PEO) dans lequel les greffons PEO sont obtenus par greffage de polymères polyéthylène glycol présentant une terminaison de type thiol. Les chaînes latérales, obtenues à l'issue de la réaction de substitution des atomes de fluor, sont greffées à la chaîne principale de type PPFS par l'intermédiaire de fonctions thioéther.

On peut encore citer les publications Powell *et al.* [7] et Pollack *et al.* [8] qui décrivent des structures polymériques dites hyperbranchées, distinctes d'une structure peigne.

Les polymères en peigne et structures polymériques hyperbranchées décrites dans ces documents ne sont en outre nullement envisagés pour une mise en œuvre pour former un électrolyte polymérique solide.

L'invention concerne encore un procédé de préparation d'un polymère en peigne selon l'invention tel que défini précédemment, comprenant au moins les étapes consistant en :
(i) disposer d'un polymère formé à partir de monomères 1-éthényl- et/ou 1-allyl- 2,3,4,5,6-pentafluorobenzène, dit polymère de type PPFS, destiné à former la chaîne principale du polymère en peigne ; et
(ii) former les chaînes latérales polymériques, en position *para* d'une partie des groupements pentafluorophényle des unités monomériques du polymère de type PPFS.

En particulier, les chaînes latérales polymériques sont à base de polymères solvants de sels de métal alcalin ou alcalino-terreux.

De manière avantageuse, comme détaillé dans la suite du texte, le polymère de type PPFS, destiné à former la chaîne principale du polymère en peigne selon l'invention, peut être synthétisé préalablement par polymérisation à partir du mélange d'un système catalytique de type Ziegler Natta comprenant un catalyseur et un co-catalyseur ; et des monomères 1-éthényl- et/ou 1-allyl- 2,3,4,5,6-pentafluorobenzène.

Comme détaillé dans la suite du texte, les chaînes latérales peuvent être formées par greffage, en position *para* d'une partie des groupements pentafluorophényle des unités monomériques du polymère de type PPFS, de polymères, destinés à former lesdites chaînes polymériques latérales, notamment de polymères solvatants, préalablement synthétisés ; ou encore en procédant à la polymérisation des chaînes latérales directement au niveau du polymère de type PPFS.

Les polymères en peigne selon l'invention, dans lesquels les chaînes latérales polymériques sont à base de polymères solvants de sels de métal alcalin ou alcalino-terreux trouvent des applications particulièrement avantageuses pour former, en combinaison avec un sel de métal alcalin ou alcalino-terreux, un électrolyte polymérique solide.

Ainsi, l'invention concerne encore l'utilisation d'un polymère en peigne selon l'invention ou obtenu par le procédé selon l'invention, dans lequel les chaînes latérales polymériques sont à base de polymères solvants de sels de métal alcalin ou alcalino-terreux, pour former, en combinaison avec au moins un sel de métal alcalin ou alcalino-terreux, un électrolyte polymérique solide dans un système électrochimique, en particulier dans une batterie au lithium.

Par « électrolyte solide », on entend un électrolyte excluant la présence d'un composant sous forme liquide, et faisant office à la fois de séparateur et de conducteur ionique dans un système électrochimique.

L'électrolyte polymérique solide formé à partir d'un polymère en peigne selon l'invention, en particulier présentant des chaînes latérales polymériques à base de polymères solvatants, peut être mis en œuvre dans de nombreux systèmes électrochimiques, tels que les générateurs, en particulier des batteries au lithium.

L'électrolyte polymérique solide formé à partir d'un polymère en peigne selon l'invention s'avère avantageux à plusieurs titres.

Comme illustré dans les exemples qui suivent, l'électrolyte polymérique solide selon l'invention présente ainsi d'excellentes performances en termes de conductivité ionique, même en l'absence d'additifs. En particulier, il présente une conductivité ionique du Li⁺, mesurée à 60°C, supérieure ou égale à 10⁻⁶ S.cm⁻¹, en particulier supérieure ou égale à 10⁻⁵ S.cm⁻¹, avantageusement supérieure ou égale à 5.10⁻⁵ S.cm⁻¹.

Par ailleurs, l'électrolyte polymérique solide formé à partir d'un polymère en peigne selon l'invention présente une bonne stabilité électrochimique au cyclage.

Un électrolyte polymérique solide formé à partir d'un polymère en peigne selon l'invention, en particulier présentant des chaînes latérales polymériques à base de polymères solvatants, permet ainsi d'accéder à des performances de conduction ionique élevée, sans que cela se fasse au détriment de l'intégrité mécanique de l'électrolyte.

Un système électrochimique, par exemple une batterie au lithium, réalisé à partir d'un électrolyte solide selon l'invention, peut fonctionner sur une large plage de température, de préférence entre 20 °C et 100 °C, plus préférentiellement entre 40 et 80 °C.

De manière avantageuse, un électrolyte polymérique solide à base d'un polymère en peigne selon l'invention présentant des chaînes latérales polymériques formées à partir de monomères cycliques choisis parmi les lactones et les carbonates cycliques de cinq à huit chaînons, en particulier des chaînes latérales de type poly(triméthylène carbonate) (PTMC) ou poly(ε-caprolactone) (PCL), peut être avantageusement mis en œuvre dans des batteries de densité énergétique élevée, en combinaison avec des électrodes positives dites à « haut » potentiel, c'est-à-dire fonctionnant à une différence de potentiel supérieure à 4 V *versus* Li/Li⁺, telles que des batteries Li⁰ vs. LiNi_{1/3}Mn_{1/3}Co_{1/3}O₂, sans impacter la stabilité thermique et électrochimique de l'électrolyte.

### Brève description des dessins

[Fig 1] présente les spectres infrarouge, respectivement du poly(2,3,4,5,6-pentafluorostyrène) (PPFS) et du poly(2,3,4,5,6-pentafluorostyrène) porteurs de greffons poly(oxyde d'éthylène) ("PPFS₄₉ₖ-g-POE_{0,35k}") préparés selon l'exemple 1 ;
[Fig 2] présente l'évolution de la conductivité ionique (en S.cm⁻¹) en fonction de la température (T en °C, et 1000/T, T étant exprimée en degré Kelvin) pour l'électrolyte solide à base du polymère en peigne PPFS₄₉ₖ-g-POE_{0,35k} préparé selon l'exemple 1 ;
[Fig 3] représente les courbes de cyclage dans une cellule symétrique Li0/électrolyte/Li0, mettant en œuvre l'électrolyte à base du polymère en peigne PPFS₄₉ₖ-g-POE_{0,35k} préparé selon l'exemple 1 ;
[Fig 4] représente les diagrammes de Nyquist (Im(Z) en fonction de Re(Z)) obtenus par spectroscopie d'impédance pour la pile bouton préparée selon l'exemple 1, à différentes densités de courant.
[Fig 5] représente l'évolution de la conductivité ionique (en S.cm⁻¹) en fonction de la température, pour les différents électrolytes selon l'invention à base de polymères en peigne de type PPFS-g-POE préparés en exemples 1 et 2.
[Fig 6] représente la contribution de l'ion Li⁺ à la conductivité ionique pour les différents électrolytes selon l'invention à base de polymères en peigne de type PPFS-g-PTMC préparés en exemples 1 et 2.
[Fig 7] représente l'évolution de la conductivité ionique (en S.cm⁻¹) en fonction de la température, pour les différents électrolytes selon l'invention à base de polymères en peigne de type PPFS-g-PTMC préparés en exemples 3, et pour des électrolytes à base de PTMC2,4k et de PTMC₅ₖ hors invention.
[Fig 8] représente la contribution de l'ion Li⁺ à la conductivité ionique pour les différents électrolytes selon l'invention à base de polymères en peigne de type PPFS-g-PTMC préparés en exemple 3, et pour des électrolytes à base de PTMC2,4k et de PTMC₅ₖ hors invention.
[Fig 9] représente l'évolution de la conductivité ionique (en S.cm⁻¹) en fonction de la température, pour les différents électrolytes selon l'invention à base de polymères en peigne de type PPFS-g-POE préparés en exemple 4 ;
[Fig 10] représente les caractérisations en cyclage galvanostatique (GCPL) effectuées en pile bouton symétrique (Li/Li), et le suivi EIS associé (diagrammes de Nyquist), de l'électrolyte PPFS₁₇₀ₖ-g-POE_{0,35k}/LiTFSI (20 % massique, 60°C) préparé en exemple 4 ;
[Fig 11] représente les caractérisations en cyclage galvanostatique (GCPL) effectuées en pile bouton symétrique (Li/Li), et le suivi EIS associé (diagrammes de Nyquist), de l'électrolyte PPFS₁₇₀ₖ-g-POE_{0,55k}/LiTFSI (20 % massique, 60°C) préparé en exemple 4 ;
[Fig 12] représente les caractérisations en cyclage galvanostatique (GCPL) effectuées en pile bouton symétrique (Li/Li), et le suivi EIS associé (diagrammes de Nyquist), de l'électrolyte PPFS₁₇₀ₖ-g-POE_{0,75k}/LiTFSI (20 % massique, 60°C) préparé en exemple 4 ;
[Fig 13] représente le comportement en cyclage Li/LFP de l'électrolyte PPFS₁₇₀ₖ-g-POE_{0,75k}/LiTFSI ([LiTFSI] = 20 % massique) à 60°C ;
[Fig 14] représente l'évolution de la conductivité ionique (en S.cm⁻¹) en fonction de la température, pour les différents électrolytes selon l'invention à base de polymères en peigne de type PPFS-g-PTMC préparés en exemple 5 ;
[Fig 15] représente les caractérisations en cyclage galvanostatique (GCPL) effectuées en pile bouton symétrique (Li/Li), et le suivi EIS associé (diagrammes de Nyquist), de l'électrolyte PPFS_{33k-g}-PTMC_{1,5k}/LiTFSI (20 % massique, 60°C) préparé en exemple 5 ;
[Fig 16] représente le comportement en cyclage Li-NMC de l'électrolyte PPFS₃₃ₖ-g-PTMC_{1,5k}/LiTFSI ([LiTFSI] = 20 % massique) à 60°C.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### Polymère en peigne selon l'invention

L'invention met en œuvre un polymère en peigne comprenant, voire étant formé d'une chaîne principale formée à partir de monomères 1-éthényl- et/ou 1-allyl- 2,3,4,5,6-pentafluorobenzène, une partie des unités monomériques de la chaîne principale étant porteuse de chaînes latérales polymériques, lesdites chaînes étant greffées *en para* des groupes pentafluorophényle.

On désignera plus simplement dans la suite du texte sous l'appellation «polymère en peigne », le polymère en peigne mis en œuvre selon l'invention.

Par « polymère en peigne », également désigné copolymère ramifié ou branché, on entend un polymère qui présente une chaîne principale polymérique linéaire et au moins deux chaînes latérales ou chaînes pendantes fixées à la chaîne principale en des points situés entre les deux extrémités de la chaîne principale, appelés points de ramification ou points de branchement. A la différence des polymères linéaires qui comportent des groupements latéraux ou groupes pendants non polymériques, les chaînes latérales des polymères en peigne sont des oligomères, des polymères ou des copolymères.

En particulier, un polymère en peigne est distinct de réseaux de polymères dits hyperbranchés ou hyper-ramifiés. En particulier, les chaînes polymériques latérales portées par la chaîne principale du polymère en peigne selon l'invention ne sont pas elles-mêmes porteuses de chaînes polymériques latérales.

Dans la présente description, en l'absence d'indications contraires, le terme « polymère » sera utilisé pour désigner, au sens large, aussi bien des homopolymères que des copolymères. Par « copolymère », on entend un polymère dérivé d'au moins deux espèces différentes de monomères.

Par « unité monomérique », on entend dans le cadre de la présente invention la plus petite unité constitutive dont la répétition conduit à une chaîne polymérique.

Comme évoqué précédemment, la chaîne principale des polymères en peigne selon l'invention est formée à partir de monomères 1-éthényl et/ou 1-allyl-2,3,4,5,6-pentafluorobenzène.

Les monomères de type 1-éthényl-2,3,4,5,6-pentafluorobenzène, encore appelés plus couramment 2,3,4,5,6-pentafluorostyrène (PFS) et 1-allyl-2,3,4,5,6-pentafluorobenzène (nom IUPAC 1,2,3,4,5-pentafluoro-6-prop-2-énylbenzène) répondent à la formule (M1) suivante : 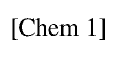 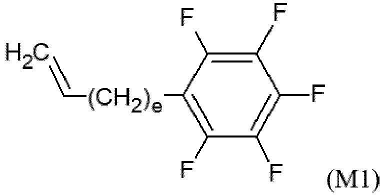 dans laquelle e vaut 0 (cas du pentafluorostyrène) ou e vaut 1 (cas du 1-allyl-2,3,4,5,6-pentafluorobenzène).

De préférence, la chaîne principale du polymère en peigne selon l'invention est formée d'un homopolymère.

Selon un premier mode de réalisation, la chaîne principale du polymère en peigne selon l'invention est formée d'un poly(2,3,4,5,6-pentafluorostyrène) (PPFS).

Selon un autre mode de réalisation, la chaîne principale du polymère en peigne selon l'invention est formée d'un poly(1,2,3,4,5-pentafluoro-6-prop-2-énylbenzène).

A des fins de simplification, dans la suite du texte, on désignera plus simplement la chaîne polymérique principale des polymères en peigne selon l'invention, en particulier de type poly(2,3,4,5,6-pentafluorostyrène) ou poly(1,2,3,4,5-pentafluoro-6-prop-2-énylbenzène), sous la dénomination « chaîne de type pentafluorostyrène » ou encore « chaîne de type PPFS ».

En particulier, la chaîne polymérique principale des polymères en peigne mis en œuvre selon l'invention peut présenter un degré de polymérisation moyen en nombre, correspondant au nombre d'unités monomères constitutives de la chaîne polymérique principale, supérieur ou égal à 50, en particulier compris entre 50 et 4 200 et plus particulièrement compris entre 50 et 520.

La chaîne polymérique principale des polymères en peigne mis en œuvre selon l'invention peut présenter une masse moléculaire moyenne en nombre Mₙ comprise entre 5000 g.mol⁻¹ et 1 000 000 g.mol⁻¹, en particulier entre 10 000 g.mol⁻¹ et 200 000 g.mol⁻¹, notamment entre 10 000 g.mol⁻¹ et 100 000 g.mol⁻¹ et plus particulièrement entre 20 000 g.mol⁻¹ et 50 000 g.mol⁻¹.

En particulier, ladite chaîne principale peut présenter une masse moléculaire moyenne en nombre Mₙ comprise entre 9 700 g.mol⁻¹ et 814 800 g.mol⁻¹, en particulier entre 9 700 g.mol⁻¹ et 100 880 g.mol⁻¹ et plus particulièrement entre 12 000 g.mol⁻¹ et 50 000 g.mol⁻¹.

La masse moléculaire moyenne en nombre peut être déterminée par chromatographie d'exclusion stérique (SEC).

Le polymère en peigne mis en œuvre selon l'invention peut, ou non, présenter des chaînes principales de type PPFS de faible dispersité.

Selon un mode de de réalisation particulier, le polymère en peigne selon l'invention présente une chaîne principale formée d'un poly(2,3,4,5,6-pentafluorostyrène), en particulier présentant une masse moléculaire moyenne en nombre comprise entre 9 700 g.mol⁻¹ et 814 800 g.mol⁻¹, en particulier entre 9 700 g.mol⁻¹ et 200 000 g.mol⁻¹, notamment entre 9 700 g.mol⁻¹ et 100 880 g.mol⁻¹ et plus particulièrement entre 12 000 g.mol⁻¹ et 50 000 g.mol. De préférence, comme décrit dans la suite du texte, la longueur de chaîne principale du polymère en peigne selon l'invention, autrement dit le degré de polymérisation de la chaîne principale du polymère en peigne selon l'invention, est suffisamment élevée, de sorte que le polymère en peigne formé selon l'invention présente une masse molaire supérieure à la masse molaire dite d'enchevêtrement critique.

La masse molaire d'enchevêtrement critique, notée M_{c}, pour un polymère donné, est généralement définie comme la masse à partir de laquelle la dynamique du polymère se situe dans un régime de reptation. Cette masse molaire d'enchevêtrement critique peut être déterminée de manière empirique par des méthodes connues de l'homme du métier.

Le contrôle de la masse moléculaire moyenne du polymère en peigne selon l'invention permet de contrôler les propriétés mécaniques du polymère en peigne obtenu, et en particulier ses propriétés de viscoélasticité.

Le polymère en peigne selon l'invention est avantageusement apte à former un réseau tridimensionnel, résultant de l'enchevêtrement des chaînes polymériques, et présente un plateau caoutchoutique identifiable par exemple par des mesures rhéologiques (par exemple, module d'Young et module de cisaillement mesurés en analyse mécanique dynamique multifréquence) sur le polymère formé.

A titre d'exemple, un polymère en peigne selon l'invention formé d'une chaîne principale poly(2,3,4,5,6-pentafluorostyrène), greffée par des chaînes latérales de type poly(oxyde d'éthylène) présente une température de transition vitreuse, notée Tg, de -60°C ; un polymère en peigne selon l'invention formé d'une chaîne principale poly(2,3,4,5,6-pentafluorostyrène), greffée par des chaînes latérales de type poly(triméthylène carbonate) présente une Tg de -40°C.

De préférence, le polymère en peigne selon l'invention présente un taux de greffage molaire en chaînes latérales polymériques, inférieur ou égal à 99 %, de préférence compris entre 25 et 95 %, et notamment compris entre 50 et 95 %.

Par « chaîne latérale polymérique » (ou « chaîne latérale à base d'un polymère »), on entend qu'une partie au moins de la chaîne latérale ou pendante, rattachée à la chaîne principale, est formée d'un polymère (ou dudit polymère). Il n'est nullement exclu que cette chaîne latérale comprenne d'autres fonctionnalités, comme par exemple une fonction ou une succession de fonctions reliant la chaîne latérale à la chaîne principale, ou encore une fonction à l'extrémité libre de la chaîne latérale, par exemple une fonction issue de l'amorceur ayant servi à la synthèse du polymère de ladite chaîne latérale.

Selon un mode de réalisation particulier, le polymère en peigne selon l'invention comprend des chaînes latérales polymériques formées au moins en partie de polymères solvants de sels de métaux alcalins ou alcalino-terreux, dits encore polymères solvatants.

Au sens de l'invention, un polymère « solvatant » est un polymère capable de dissoudre un ou plusieurs sels de métal alcalin ou alcalino-terreux, par exemple des sels de lithium, de sodium, de magnésium ou de calcium, en particulier des sels de lithium. Plus particulièrement, un polymère solvatant comprend des hétéroatomes, de préférence des atomes d'oxygène.

Un polymère solvatant est un polymère qui comporte des unités solvatantes capables de dissocier ioniquement un sel métallique (ou de solvater les cations du sel de métal alcalin ou alcalino-terreux), en particulier des unités contenant au moins un hétéroatome, notamment choisi parmi le soufre, l'oxygène et l'azote, de préférence l'oxygène.

Les polymères solvatants formant lesdites chaînes latérales du polymère en peigne selon l'invention peuvent être ainsi, en combinaison avec un sel de métal alcalin ou alcalino-terreux, conducteurs ioniques. Par polymère « conducteur ionique », on entend désigner un polymère apte à conduire des ions, et plus particulièrement des cations, en particulier le proton H⁺ et des cations des métaux alcalins et alcalino-terreux, et plus particulièrement aptes à conduire des cations lithium. Le mécanisme de conduction ionique desdites chaînes polymériques mises en œuvre selon l'invention peut être de différente nature.

De préférence, les chaînes polymériques latérales sont formées par des homopolymères.

Les chaînes latérales polymériques d'un polymère en peigne selon l'invention comprennent plus particulièrement des atomes d'oxygène, en particulier des fonctions éther, ester ou ester de carbonate.

De préférence, les chaînes latérales polymériques sont liées en position *para* des groupes pentafluorophényle de la chaîne principale de type PPFS par l'intermédiaire d'un atome d'oxygène, plus particulièrement par l'intermédiaire d'une fonction éther. Autrement dit, l'atome de carbone en *para* du groupe pentafluorostyrène dans une unité monomérique greffée d'un polymère en peigne selon l'invention porte un atome d'oxygène.

En particulier, le polymère en peigne selon l'invention peut comprendre des unités monomériques greffées de formule (I) suivante : 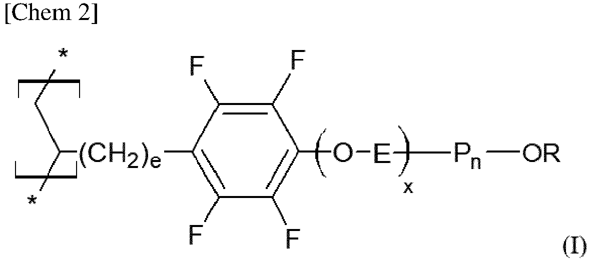 dans laquelle : e vaut 0 ou 1 ; x vaut 0 ou 1 ; E représente un groupe alkylène en C₁ à C₆, en particulier en C₁ à C₃, et notamment en C₁ ou C₂; Pₙ représente une chaîne polymérique, en particulier formée au moins en partie d'un polymère solvant de sels de métal alcalin ou alcalino-terreux, en particulier de sels de lithium, ladite chaîne polymérique comprenant plus particulièrement des atomes d'oxygène, en particulier des fonctions éther, ester ou ester de carbonate, de préférence Pₙ est de formule (C) suivante : 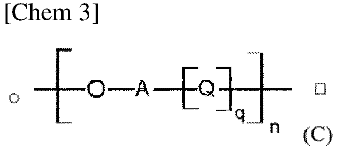 avec A représentant un groupe alkylène, linéaire ou ramifié, en C₂ à C₁₁ en particulier un groupe alkylène linéaire en C₂ à C₁₁, en particulier en C₂ à C₅ (autrement dit un groupe - (CH₂)ₚ- avec p un nombre entier compris entre 2 et 11, en particulier entre 2 et 5) ; q vaut 0 ou 1 ; Q représente un groupe oxycarbonyl -OC(O)- ou carbonyl -C(O)- ; n est un nombre entier positif, correspondant au degré de polymérisation de la chaîne polymérique Pₙ, en particulier n est supérieur ou égal à 4, en particulier compris entre 5 et 1000, notamment compris entre 5 et 500 et plus particulièrement compris entre 5 et 100 ; o représentant la liaison de la chaîne polymérique latérale à l'unité monomérique de la chaîne principale, le cas échéant par l'intermédiaire du groupe -O-E- et □ la liaison avec le groupe OR ; R représente un groupement (ou bout de chaîne) « non réactif ».

Par groupement « non réactif », on entend désigner un groupement non réactif dans les conditions de préparation et de mise en œuvre du polymère en peigne. Plus particulièrement, le groupement R ne présente pas de fonction réactive vis-à-vis des unités monomériques constitutives de la chaîne principale de type PPFS et des chaînes polymériques constituant les chaînes latérales dans le polymère en peigne formé, ni de fonction réactive vis-à-vis des métaux alcalin ou alcalino-terreux, notamment vis-à-vis du lithium métal, des sels de métal alcalin ou alcalino-terreux, notamment vis-à-vis des sels de lithium, et des différents matériaux actifs selon l'invention. Ainsi, le groupement R ne doit pas comporter notamment de fonction hydroxyle, de fonction amine, de fonction thiol ou encore d'atome d'halogène autre que le fluor.

Le groupement R peut être plus particulièrement :
- un groupe alkyle, linéaire ou ramifié, pouvant être substitué par des groupements mono- ou polycycliques ou mono- ou polyhétérocycliques, condensés ou non, saturés ou insaturés, aromatiques ou non ; ou
- un groupe mono- ou polycyclique ou mono- ou polyhétérocyclique, condensé ou non, saturé ou insaturé, aromatique ou non ; le groupe alkyle et/ou le ou lesdits groupements mono- ou poly(hétéro)cyliques pouvant éventuellement être substitués par un ou plusieurs atomes de fluor.

Dans le cadre de l'invention, on entend par :
- « C_{t-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle ;
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

En particulier, un groupement polycyclique selon l'invention est formé de deux à six cycles, les cycles comprenant, indépendamment les uns des autres, de 4 à 6 chaînons. Le groupement polycyclique peut inclure un ou plusieurs hétéroatomes. On parle alors de « groupement polyhétérocyclique ».

Selon un mode de réalisation particulier, le polymère en peigne selon l'invention comprend ainsi des unités monomériques greffées de formule (I') suivante : 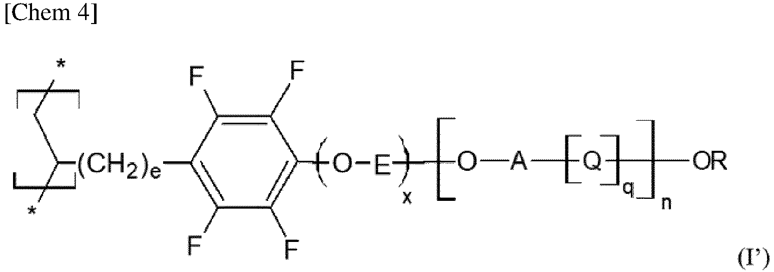 dans laquelle e, E, x, A, Q, q, n et R sont tels que définis précédemment.

Plus particulièrement, le polymère en peigne selon l'invention peut comprendre des unités monomériques greffées de formule (I"): 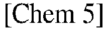 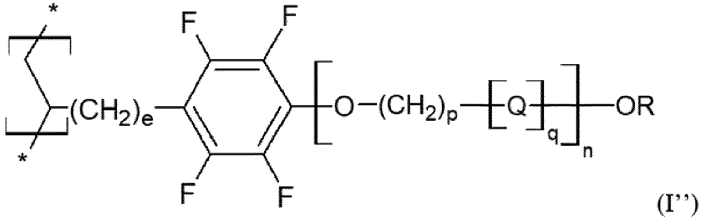 dans laquelle e, p, Q, q, n et R sont tels que définis précédemment.

Les groupements R à l'extrémité libre des chaînes latérales peuvent être plus particulièrement issus de l'amorceur ROH mis en œuvre pour la synthèse de ladite chaîne polymérique greffée, en particulier pour la synthèse par ouverture de cycle (encore connue sous l'appellation « ROP » pour « Ring Opening Polymerization » en terminologie anglo-saxonne) de monomères cycliques de type lactones ou carbonates cycliques, comme décrit plus précisément dans la suite du texte. Des exemples d'amorceurs ROH sont plus particulièrement donnés dans la suite du texte.

De préférence, le groupe R présente une masse molaire inférieure ou égale à 500 g.mol⁻¹, en particulier comprise entre 30 et 300 g.mol⁻¹, de préférence inférieure ou égale à 260 g.mol⁻¹, notamment inférieure ou égale à 250 g.mol⁻¹.

De préférence, le groupe R représente :
- un groupe alkyle en C₁ à C₂₀, éventuellement substitué par un groupement phényle ; ou
- un groupe phényle ; le ou lesdits groupements alkyle et phényle étant éventuellement substitués par un ou plusieurs atomes de fluor.

A titre d'exemple, R peut être un groupe méthyle ou un groupe 3-phénylpropyle.

De préférence, les chaînes polymériques latérales du polymère en peigne selon l'invention présentent un degré de polymérisation moyen en nombre, correspondant au nombre d'unités monomères constitutives de la chaîne polymérique latérale, supérieur ou égal à 4, en particulier compris entre 5 et 1000 et plus particulièrement compris entre 5 et 500 et plus particulièrement compris entre 5 et 100.

En particulier, le polymère en peigne selon l'invention peut comprendre des unités monomériques greffées de formule (I') précitée, dans laquelle n est supérieur ou égal à 4, en particulier compris entre 5 et 1000 et plus particulièrement compris entre 5 et 500 et plus particulièrement compris entre 5 et 100.

Les chaînes latérales polymériques du polymère en peigne selon l'invention présentent de préférence une masse moléculaire moyenne en nombre Mₙ comprise entre 200 et 120 000 g.mol⁻¹, en particulier entre 200 et 60 000 g.mol⁻¹ et plus particulièrement entre 200 et 12 000 g.mol⁻¹.

La masse moléculaire moyenne en nombre peut être contrôlée notamment lors de la synthèse du polymère constitutif des chaînes latérales par le rapport molaire du ou desdits monomère(s) à l'amorceur.

De préférence, les chaînes latérales polymériques du polymère en peigne selon l'invention présentent une faible dispersité, traduisant des longueurs de chaînes latérales approximativement identiques. En particulier, la dispersité en masse, notée D_{w}, est de préférence comprise entre 1 et 2,5, en particulier entre 1,01 et 1,5. Une faible dispersité des chaînes latérales du polymère en peigne selon l'invention permet avantageusement d'atteindre, lors de sa mise en œuvre pour former un électrolyte polymérique solide selon l'invention, une meilleure nanoségrégation des phases entre les chaînes principales comprenant les cycles aromatiques fluorés et les chaînes pendantes ; et ainsi d'améliorer les propriétés mécaniques et de conductivité ionique dans le cas de chaines latérales à base de polymères solvatants.

La dispersité en masse D_{w} peut être calculée à partir de l'équation D_{w} = M_{w}/Mₙ avec M_{w} représentant la masse moléculaire moyenne en poids, et Mₙ représentant la masse moléculaire moyenne en nombre.

De préférence, le polymère en peigne mis en œuvre selon l'invention est de formule (II) : 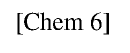 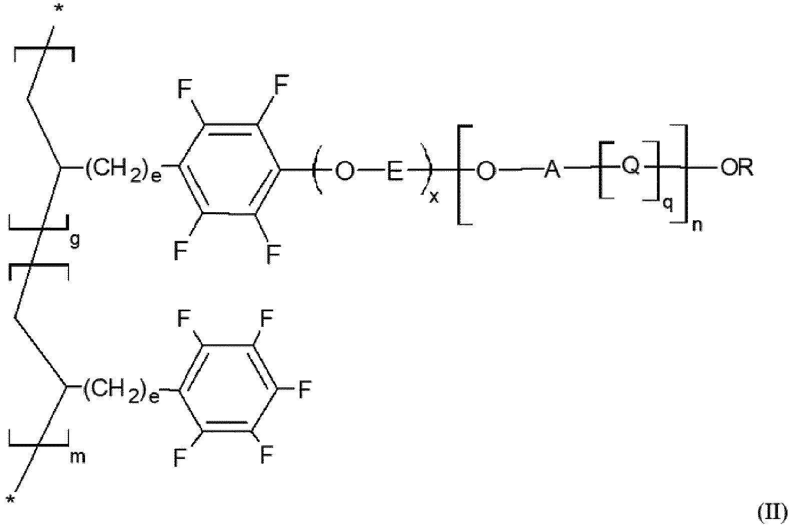 dans laquelle e, E, x, A, q, Q, n et R sont tels que définis précédemment ; g correspond au nombre moyen d'unités monomériques porteuses des chaînes latérales polymériques selon l'invention ; et m correspond au nombre moyen d'unités monomériques non greffées ; avec g/(g+m), représentant le taux de greffage molaire en chaînes latérales polymériques, étant inférieur ou égal à 0,99, en particulier étant compris entre 0,25 et 0,99, de préférence étant supérieur ou égal à 0,50 et inférieur ou égal à 0,99, et notamment compris entre 0,5 et 0,95 ;
l'ordre de succession des deux types d'unités monomériques formant le polymère de formule (II) étant totalement aléatoire.

En particulier, le polymère en peigne mis en œuvre selon l'invention peut être de formule (II') : 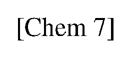 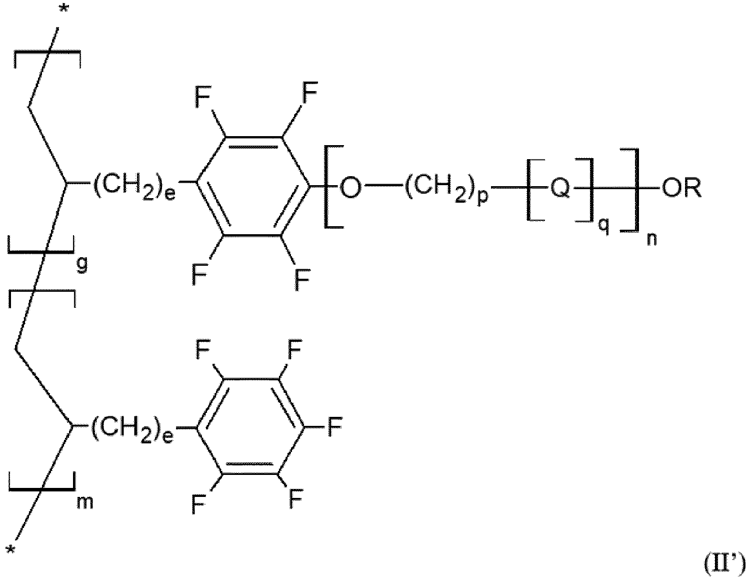 dans laquelle e, p, q, Q, n, R, g et m sont tels que définis précédemment, l'ordre de succession des deux types d'unités monomériques formant le polymère de formule (II') étant totalement aléatoire.

Les extrémités ou bouts de chaîne de la chaîne polymérique principale de type PPFS, non représentées sur les formules (II) et (II') précitées, peuvent être par exemple des groupes méthyle, éthyle, butyle ou alcényle. La nature de ces extrémités dépend notamment de la nature du catalyseur de type Ziegler Natta mis en œuvre pour la synthèse de la chaîne principale de type PPFS, comme détaillé dans la suite du texte.

Selon une première variante de réalisation, le polymère en peigne selon l'invention présente des chaînes latérales de type polyalkylène glycol, par exemple de type polyéthylène glycol et/ou polypropylène glycol, ou leurs copolymères. De préférence, le polymère en peigne selon l'invention peut présenter des chaînes latérales de type polyéthylène glycol (également appelé poly(oxyde d'éthylène) ou POE).

Autrement dit, le polymère en peigne selon l'invention peut comprendre plus particulièrement des unités monomériques de formule (I') précitée, dans laquelle x vaut 0 ou 1, en particulier x vaut 0; q=0, A représente -(CH₂)ₚ- avec p compris entre 2 et 5, en particulier p vaut 2 ; et R représente CH3.

Les unités monomériques de la chaîne principale de type PPFS du polymère en peigne selon l'invention peuvent être ainsi de formule (I'-a) suivante : 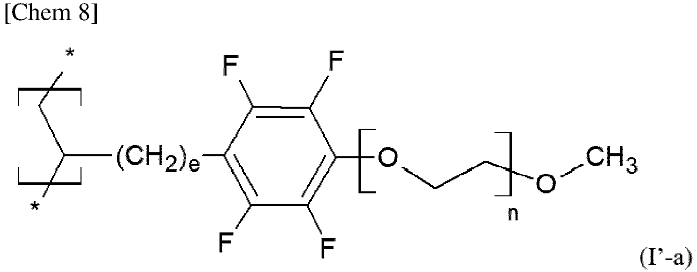 dans laquelle e et n sont tels que définis précédemment, en particulier e vaut 0.

En particulier, le polymère en peigne peut être de formule (II') précitée, dans laquelle q=0, p=2 et R représente CH₃.

De préférence, les chaînes latérales de type poly(alkylène glycol), en particulier de type poly(oxyde d'éthylène) du polymère en peigne selon l'invention présentent un degré de polymérisation compris entre 4 et 1000, en particulier supérieur ou égal à 5, de préférence supérieur ou égal à 6, en particulier compris entre 8 et 100.

En particulier, les chaînes de type poly(oxyde d'éthylène) greffées peuvent présenter une masse molaire moyenne en poids comprise entre 200 et 50 000 g.mol⁻¹, de préférence entre 350 et 5 000 g.mol⁻¹.

Selon un mode de réalisation particulier, le polymère en peigne selon l'invention est formé d'une chaîne principale poly(2,3,4,5,6-pentafluorostyrène), porteuse de chaînes latérales de type poly(oxyde d'éthylène).

Selon une autre variante de réalisation, le polymère en peigne selon l'invention présente des chaînes latérales polymériques formées à partir d'au moins un monomère cyclique choisi parmi les lactones et les carbonates cycliques de cinq à huit chaînons, et en particulier des chaînes latérales de type poly(triméthylène carbonate) (noté PTMC) ou poly(ε-caprolactone) (noté PCL).

Comme décrit plus précisément dans la suite du texte, les chaînes polymériques mises en œuvre comme chaînes latérales d'un polymère en peigne selon l'invention peuvent être obtenues par polymérisation par ouverture de cycle d'un ou plusieurs monomères cycliques choisis parmi les lactones et les carbonates cycliques de cinq à huit chaînons, en présence d'au moins une molécule organique, dite « amorceur », portant une fonction hydroxyle, notée ROH.

Les monomères cycliques répondent plus particulièrement à la formule suivante : 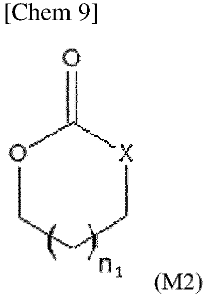 dans laquelle :
- X représente un atome de carbone ou un atome d'oxygène ;
- n₁ vaut 0 ou est un entier compris entre 1 et 9, en particulier entre 1 et 3 ; lesdits monomères étant éventuellement substitués, sur un ou plusieurs des atomes de carbone du cycle, par un ou plusieurs substituants R₁. Les substituants du monomère cyclique, R₁, peuvent être plus particulièrement choisis parmi des groupements alkyles, en particulier en C₁ à C₅, linéaires ou ramifiés.

Selon un mode de réalisation particulier, le polymère en peigne selon l'invention présente des chaînes latérales polymériques formées à partir de monomères de type carbonates cycliques de cinq à huit chaînons.

Les carbonates cycliques peuvent être plus particulièrement de formule (M3) suivante : 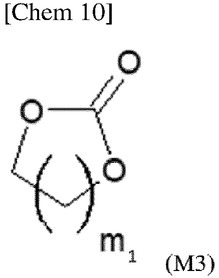 m₁ étant un entier compris entre 1 et 3, de préférence m₁ vaut 1 ou 2 ; lesdits monomères étant éventuellement substitués, sur un ou plusieurs des atomes de carbone du cycle, par un ou plusieurs substituants R₁ tels que définis précédemment.

A titre d'exemple de monomère carbonate cyclique, on peut citer le triméthylène carbonate et ses dérivés, en particulier le triméthylène carbonate.

Un polymère en peigne selon l'invention peut comprendre plus particulièrement des unités monomériques de formule (I') précitée, dans laquelle x vaut 0 ou 1, de préférence x=0 ; q=1 ; A représente -(CH₂)ₚ- avec p compris entre 2 et 4, en particulier p=3 ; Q représente -OC(O)- et R est tel que défini précédemment, en particulier R est un groupement issu de l'amorceur ROH mis en œuvre pour la synthèse de la chaîne polymérique latérale à partir des monomères de type carbonates cycliques.

Les unités monomériques greffées du polymère en peigne selon l'invention peuvent être de formule (I'-b) suivante : 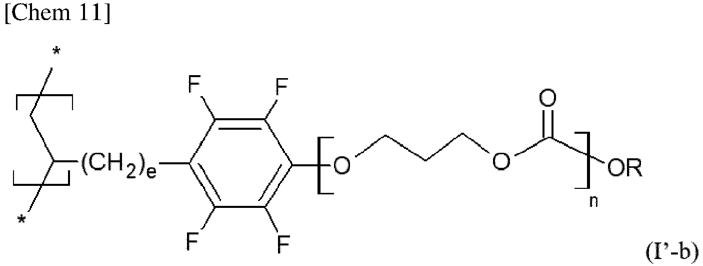 dans laquelle e et n sont tels que définis précédemment ; et R représente un groupement issu de l'amorceur ROH mis en œuvre pour la synthèse de la chaîne polymérique latérale poly(triméthylène carbonate) (PTMC).

De préférence, les chaînes latérales formées à partir de monomères de type carbonate cyclique, en particulier de type poly(triméthylène carbonate), du polymère en peigne selon l'invention présentent un degré de polymérisation compris entre 5 et 500, en particulier entre 5 et 200, et de préférence entre 5 et 75.

En particulier, les chaînes de type poly(triméthylène carbonate) greffées peuvent présenter une masse molaire moyenne en poids comprise entre 510 et 51 000 g.mol⁻¹, de préférence entre 510 et 20 400 g.mol⁻¹ et de préférence entre 510 g.mol⁻¹ et 7 650 g.mol⁻¹.

Selon un mode de réalisation particulier, le polymère en peigne selon l'invention est formé d'une chaîne principale poly(2,3,4,5,6-pentafluorostyrène), porteuse de chaînes latérales de type poly(triméthylène carbonate), en particulier telles que définies précédemment.

Selon un mode de réalisation particulier, le polymère en peigne selon l'invention présente des chaînes latérales polymériques formées à partir de monomères de type lactone.

Par lactone, on entend plus particulièrement des monomères répondant à la formule suivante : 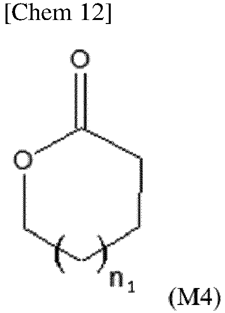 dans laquelle n₁ est un entier allant de 1 à 9, en particulier de 1 à 3 ; lesdits monomères étant éventuellement substitués, sur un ou plusieurs des atomes de carbone du cycle, par un ou plusieurs substituants R₁ tels que définis précédemment.

A titre d'exemple de monomère de type lactone, on peut citer l'ε-caprolactone.

Un polymère en peigne selon l'invention peut comprendre plus particulièrement des unités monomériques de formule (I') précitée, dans laquelle x vaut 0 ou 1, de préférence x=0 ; q=1 ; A représente -(CH₂)ₚ- avec p compris entre 4 et 12, en particulier entre 4 et 6, en particulier p=5, Q représente -C(O)- et R est tel que défini précédemment, en particulier R est un groupement issu de l'amorceur ROH mis en œuvre pour la synthèse de la chaîne polymérique latérale à partir des monomères de type lactone.

Les unités monomériques greffées du polymère en peigne selon l'invention peuvent être de formule (I'-c) suivante : 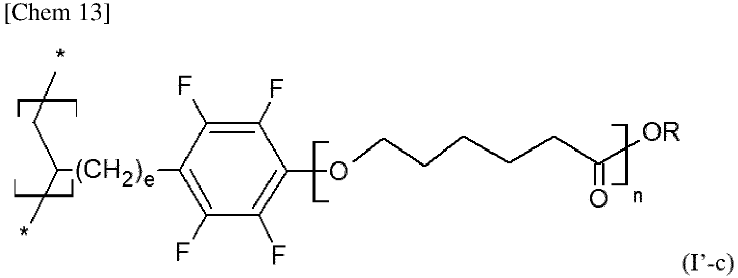 dans laquelle e et n sont tels que définis précédemment ; et R représente un groupement issu de l'amorceur ROH mis en œuvre pour la synthèse de la chaîne polymérique latérale poly(ε-caprolactone) (PCL).

De préférence, les chaînes latérales formées à partir de monomères de type lactone, en particulier de type poly(ε-caprolactone), du polymère en peigne selon l'invention présentent un degré de polymérisation, compris entre 5 et 500, en particulier entre 5 et 200, et de préférence entre 5 et 75.

En particulier, les chaînes de type poly(ε-caprolactone) greffées peuvent présenter une masse molaire moyenne en poids comprise entre 570 et 57000 g.mol⁻¹, de préférence entre 570 et 22800 g.mol⁻¹ et de préférence entre 570 et 8550 g.mol⁻¹.

Selon un mode de réalisation particulier, le polymère en peigne selon l'invention est formé d'une chaîne principale poly(2,3,4,5,6-pentafluorostyrène), porteuse de chaînes latérales de type poly(ε-caprolactone), en particulier telles que définies précédemment.

Il est entendu qu'un polymère en peigne selon l'invention peut comprendre des chaînes polymérique latérales de différentes natures, en particulier choisies parmi des chaînes latérales de type poly(oxyde d'éthylène), poly(triméthylène carbonate) et/ou poly(ε-caprolactone). De préférence, le polymère en peigne selon l'invention présente des chaînes latérales de même nature.

### Synthèse du polymère en peigne selon l'invention

L'invention concerne encore un procédé de préparation d'un polymère en peigne selon l'invention, en particulier tel que défini précédemment, ledit procédé procédant à la formation des chaînes latérales polymériques au niveau d'un polymère de type PPFS, formé à partir de monomères 1-éthényl- et/ou 1-allyl-2,3,4,5,6-pentafluorobenzene.

Plus particulièrement, l'invention concerne un procédé de synthèse d'un polymère en peigne selon l'invention comprenant au moins les étapes consistant en :
(i) disposer d'un polymère formé à partir de monomères 1-éthényl- et/ou 1-allyl- 2,3,4,5,6-pentafluorobenzène, dit polymère de type PPFS, destiné à former la chaîne principale du polymère en peigne ; et
(ii) former les chaînes latérales polymériques, en position *para* d'une partie des groupements pentafluorophényle des unités monomériques dudit polymère de type PPFS.

En particulier, les chaînes latérales polymériques sont à base de polymères solvants de sels de métal alcalin ou alcalino-terreux, comme décrit précédemment.

### (i) Polymère de type PPFS

Comme mentionné précédemment, le polymère en peigne selon l'invention est formé à partir d'un polymère de type PPFS synthétisé au préalable et destiné à former la chaîne principale du polymère en peigne selon l'invention, en particulier tel que décrit précédemment.

Le polymère de type PPFS dérive de la polymérisation de monomères 1-éthényl et/ou 1-allyl-2,3,4,5,6-pentafluorobenzène, de formule (M1) telle que définie précédemment.

Le polymère de type PPFS répond ainsi à la formule (III) suivante : 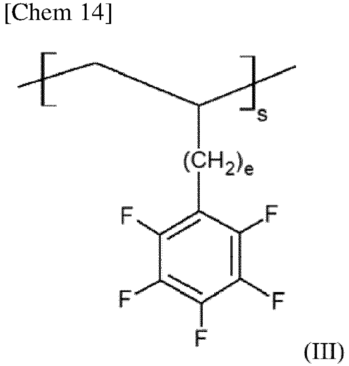 dans laquelle e vaut 0 ou 1 ; s représente le nombre d'unités monomériques du polymère de type PPFS (correspondant au degré de polymérisation), en particulier s est compris entre 25 et 5 155, en particulier entre 50 et 4200, notamment entre 51 et 510 et de préférence entre 100 et 520 et en particulier entre 100 et 258.

De préférence, le polymère de type PPFS est un homopolymère, de préférence un poly(2,3,4,5,6-pentafluorostyrène).

Le polymère de type PPFS, destiné à former la chaîne principale, en particulier de type poly(2,3,4,5,6-pentafluorostyrène), peut présenter une masse moléculaire moyenne en nombre Mₙ comprise entre 5000 g.mol⁻¹ et 1 000 000 g.mol⁻¹, en particulier entre 10 000 g.mol⁻¹ et 100 000 g.mol⁻¹ et plus particulièrement entre 20 000 g.mol⁻¹ et 50 000 g.mol⁻¹. En particulier, le polymère poly(2,3,4,5,6-pentafluorostyrène) peut présenter une masse moléculaire moyenne en nombre comprise entre 9700 g.mol⁻¹ et 814 800 g.mol⁻¹, en particulier entre 9 700 g.mol⁻¹ et 100 880 g.mol⁻¹ et plus particulièrement entre 12 000 g.mol⁻¹ et 50 000 g.mol.

En particulier, il peut présenter une faible dispersité en masse, notamment telle que définie précédemment pour la chaîne polymérique principale du polymère en peigne selon l'invention.

Le polymère de type PPFS peut être obtenu par des méthodes de synthèse connues de l'homme du métier. Par exemple, il peut être synthétisé par une méthode de polymérisation radicalaire, en particulier par polymérisation radicalaire contrôlée, telle que décrite par exemple par Jankova *et al.* [9].

Alternativement aux procédés décrits dans la littérature, selon une variante de réalisation particulièrement avantageuse, le polymère de type PPFS destiné à former la chaîne principale d'un polymère en peigne selon l'invention, est synthétisé par catalyse Ziegler-Natta.

Avantageusement, cette variante de synthèse permet de conduire à des polymères de masses moléculaires moyennes et de dispersité ajustables, avec de bons rendements.

Le polymère de type PPFS peut ainsi être formé par polymérisation à partir du mélange d'un système catalytique de type Ziegler Natta comprenant un catalyseur et un co-catalyseur ; et de monomères 1-éthényl- et/ou 1-allyl- 2,3,4,5,6-pentafluorobenzène.

Cette méthode de synthèse comprend plus particulièrement :
- la mise en contact d'un système catalytique de type Ziegler Natta comprenant un catalyseur et un co-catalyseur ; avec des monomères de formule (M1) précitée ;
- l'exposition du mélange ainsi formé à des conditions d'agitation et de chauffage propice à la polymérisation desdits monomères.

Les systèmes catalytiques de type Ziegler-Natta ont déjà été décrits par exemple pour la synthèse des polyoléfines ([10]-[12]). Le système catalytique de type Ziegler peut être de toutes générations, i.e. 1, 2, 3, 4 ou ultérieures. Ledit système catalytique peut être supporté, homogène ou hétérogène.

Le système catalytique de type Ziegler Natta mis en œuvre pour la synthèse du polymère de type PPFS peut comprendre :
- un catalyseur contenant un dérivé, notamment un halogénure ou un alcoolate, d'un métal de transition du groupe IV, V ou VI de la classification périodique des éléments, de préférence choisi parmi le titane, le zirconium, le vanadium, le cobalt, le chrome et le nickel ; et
- un co-catalyseur contenant un hydrure ou un dérivé alkylé d'un élément des colonnes 1, 2 ou 13 de la classification périodique des éléments, et de préférence contenant un hydrure ou un dérivé alkylé d'aluminium.

Selon une variante particulière de ce mode de réalisation, le catalyseur contenant un dérivé d'un métal de transition du groupe IV, V ou VI de la classification périodique des éléments est choisi parmi TiCl₄, TiCl₃, VCl₃, VCl₄, COCl₂, Ti(OBu)4 et Cr(acac)3.

En particulier, le co-catalyseur contenant un hydrure ou un dérivé alkylé d'un élément des colonnes 1, 2 ou 13 de la classification périodique des éléments est choisi parmi AlEt₃, AlEt₂Cl, AlEtCl, AlEtCl₂, AlBu₃, GaEt₃ et BeEt₂. De manière préférée, selon ce mode de réalisation, le système catalytique est choisi parmi TiCl₄/AlEt₃, TiCl₃/AlEt₂Cl, TiCl₃/GaEt₃, TiCl₃/BeEt₂, VCl₄/AlEt₂Cl, COCl₂/AlEtCl, VCl₃/AlEt₃, Ti(OBu)₄/AlEt₃, Cr(acac)₃/AlEt₃, et encore plus préférentiellement est TiCl₄/AlEt₃.

Un tel système catalytique de type Ziegler Natta peut être par exemple préparé en ajoutant du triéthyl aluminium à du chlorure de titane, puis en laissant stabiliser le mélange pendant 30 minutes.

Alternativement, le système catalytique de type Ziegler Natta peut comprendre :
- du TiCl₄ supporté sur du MgCl₂ à titre de catalyseur ; et
- du AlEt3 à titre de co-catalyseur.

Alternativement, le système catalytique de type Ziegler Natta peut comprendre :
- un catalyseur choisi parmi les métallocènes ; et
- un co-catalyseur choisi parmi le méthylaluminoxane (MAO), Ph₃C⁺B(C₆F₅)₄⁻ et B(C₆F₅)₃. De manière préférée, selon ce mode de réalisation, le système catalytique est choisi parmi ZrCp₂Cl₂/MAO, ZrCp₂Cl₂/B(C₆F₅)₃, ZrCp₂Ch/Ph₃C⁺B(C₆F₅)₄⁻, CpTiCl₃/MAO, et

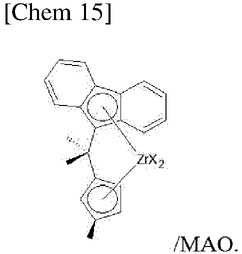

Selon un mode de réalisation préféré, le ratio molaire catalyseur/co-catalyseur est compris entre 0,3 et 10, de préférence compris entre 0,5 et 2.

La mise en contact d'un système catalytique de type Ziegler Natta, en particulier tel que défini précédemment, avec les monomères de formule (M1) précitée peut être effectuée par simple mélange, en présence ou non d'un solvant tel que le fluorobenzène ou le tétrahydrofurane. Le ratio molaire monomères (Ml)/système catalytique peut être compris entre 10 et 1000, en particulier entre 10 et 250.

Le mélange est ensuite exposé à des conditions d'agitation et de chauffage propices à la polymérisation des monomères (M1). En particulier, le mélange peut être exposé à un palier de température compris entre 60°C et 80°C, notamment pendant une durée d'au moins 10 heures. L'agitation peut être opérée de manière manuelle ou mécanique, en particulier à l'aide d'un dispositif classique d'agitation.

De préférence, la synthèse du polymère de type PPFS est suivie d'une étape de neutralisation du catalyseur, par exemple avec de l'éthanol, puis de filtration du système catalytique. Le polymère de type PPFS ainsi formé peut être précipité, par exemple dans du méthanol.

### (ii) Formation des chaînes latérales polymériques

Dans une étape (ii), les chaînes latérales polymériques, en particulier telles que définies précédemment pour le polymère peigne selon l'invention, sont formées.

Selon une première variante de réalisation, les chaînes latérales peuvent être formées par greffage, en position *para* d'une partie des groupements pentafluorophényle des unités monomériques du polymère de type PPFS, des polymères destinés à former lesdites chaînes polymériques latérales, en particulier de polymères solvants de sels de métal alcalin ou alcalino-terreux (polymères solvatants), préalablement synthétisés.

Dans cette première variante de réalisation, la formation des chaînes latérales polymériques en étape (ii) du procédé de l'invention peut être opérée par mise en contact du polymère de type PPFS avec au moins un polymère destiné à former les chaînes polymériques latérales du polymère en peigne, et présentant à l'une de ses extrémités une fonction hydroxyle (-OH) libre, dans des conditions propices au greffage dudit polymère en position *para* d'un groupement pentafluorophényle.

Le polymère destiné à former les chaînes polymériques latérales du polymère en peigne selon l'invention, peut être de formule (IV) suivante : 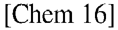 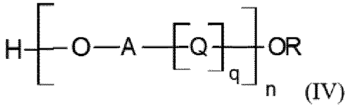 dans laquelle A, Q, q, n et R sont tels que définis précédemment.

En particulier, le polymère destiné à former les chaînes polymériques latérales du polymère en peigne selon l'invention, présente la formule (IV') suivante : 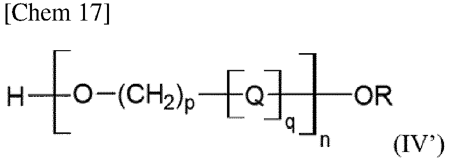 dans laquelle p, Q, q, n et R sont tels que définis précédemment.

Les polymères destinés à former les chaînes polymériques latérales du polymère en peigne selon l'invention peuvent être disponibles commercialement, ou encore synthétisés selon des méthodes connues de l'homme du métier.

De préférence, les polymères destinés à former les chaînes polymériques latérales du polymère en peigne selon l'invention présentent une faible dispersité. En particulier, la dispersité en masse, notée D_{w}, est de préférence comprise entre 1 et 2,5, en particulier entre 1,01 et 1,5.

Comme décrit précédemment, selon une première variante de réalisation, le polymère destiné à former les chaînes polymériques latérales du polymère en peigne selon l'invention peut être un polyalkylène glycol, de préférence un polyéthylène glycol, porteur d'une unique fonction terminale (bout de chaîne) hydroxyle, l'autre fonction terminale étant une fonction non-réactive vis-à-vis du polymère de type PPFS, de préférence un groupe C₁-C₄-alkyle, en particulier un groupe méthyle.

De tels polymères peuvent être synthétisés selon des méthodes connues de l'homme du métier, ou encore être disponibles commercialement, par exemple chez Sigma-Aldrich. Comme décrit précédemment, le polyéthylène glycol peut présenter une masse molaire moyenne en poids comprise entre 200 et 50000 g.mol⁻¹, de préférence entre 350 et 5000 g.mol⁻¹.

Selon une autre variante de réalisation, le polymère destiné à former les chaînes polymériques latérales du polymère en peigne selon l'invention peut être un polymère d'au moins un monomère cyclique choisi parmi les lactones et les carbonates cycliques de cinq à huit chaînons, en particulier tels que définis précédemment, et présentant une unique fonction hydroxyle terminale libre. En particulier, il peut s'agir d'un poly(triméthylène carbonate) (PTMC) ou poly(ε-caprolactone).

Ces polymères peuvent être synthétisés par polymérisation par ouverture de cycle (ROP), à partir des monomères cycliques, en présence d'au moins une molécule organique, dite « amorceur », portant une fonction hydroxyle, et éventuellement, en présence d'au moins un catalyseur de la réaction de polymérisation, par exemple suivant le protocole décrit par Makiguchi *et al*. [4].

L'amorceur pour la synthèse du polymère à partir des monomères cycliques de type lactone ou carbonate cyclique est plus particulièrement de formule ROH avec R étant tel que défini précédemment.

L'amorceur ROH mis en œuvre pour la synthèse du polymère destiné à former les chaînes polymériques latérales du polymère peigne selon l'invention, peut être par exemple choisi parmi les molécules suivantes.

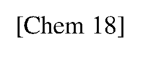

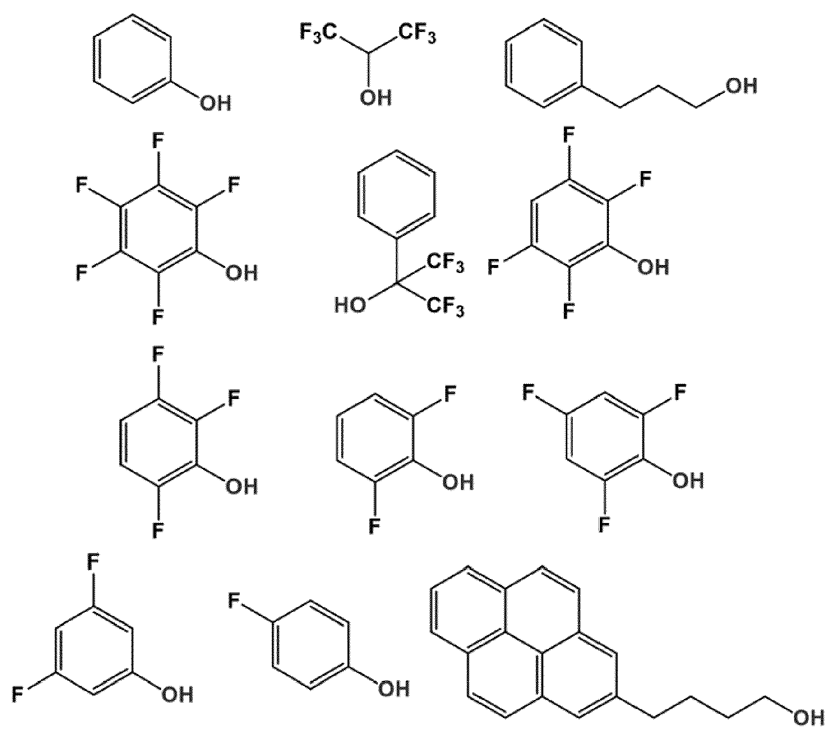

A titre d'exemple, l'amorceur peut être l'alcool 3-phényl-1-propanol.

Comme décrit précédemment, l'amorceur va être intégré en bout de chaîne du polymère destiné à former les chaînes latérales du polymère en peigne selon l'invention.

La réaction de polymérisation par ouverture de cycle des monomères de type lactone ou carbonate cyclique peut être avantageusement catalysée, par exemple par un catalyseur choisi parmi des composés phosphorés substitués, tel que le diphénylphosphate (DPP) ou encore par des composés de type métalliques tel que le diéthylhexanoate d'étain (Sn(Oct)2). L'homme du métier est à même d'ajuster les conditions opératoires de la réaction de polymérisation pour obtenir les polymères souhaités, destinés à former les chaînes polymériques latérales du polymère en peigne selon l'invention, présentant à l'une de leurs extrémités une fonction hydroxyle libre. La réaction de ROP peut être par exemple opérée à une température comprise entre 20 et 110 °C, en particulier entre 40 et 80 °C. La réaction peut être conduite sous agitation en milieu solvant, par exemple dans un ou plusieurs solvants apolaires et aprotiques, tel que le toluène, ou en masse.

Les réactions par ROP pour la synthèse de polymères destinés à former les chaînes latérales du polymère en peigne selon l'invention, de type poly(triméthylène carbonate) et poly(ε-caprolactone), à partir des monomères carbonate cyclique de type triméthylène carbonate et l'ε-caprolactone, et mettant en œuvre comme amorceur l'alcool 3-phényl-1-propanol, sont par exemple représentées ci-dessous.

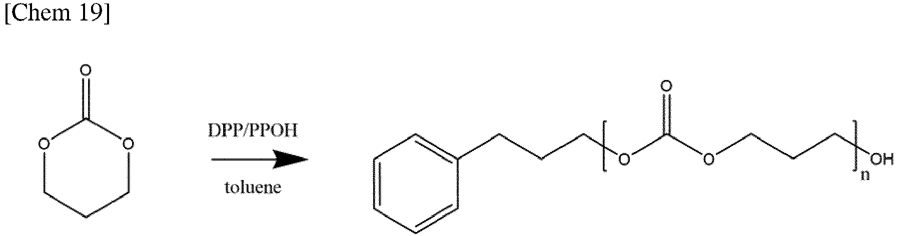

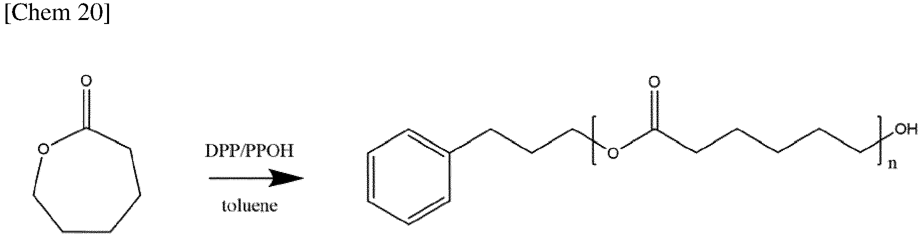

Les polymères destinés à former les chaînes polymériques latérales, en particulier de formule (IV) ou (IV') précitée, sont aptes à être greffés en position *para* des groupes pentafluorophényles des unités monomériques de la chaîne de type PPFS, par réaction de substitution nucléophile, appelée encore réaction de type « para click » entre la fonction hydroxyle portée par lesdits polymères et l'atome de fluor en position *para* des groupes pentafluorophényle des unités monomériques de la chaîne de type PPFS. La réaction de substitution nucléophile est régiosélective, à savoir que seul l'atome de fluor en position *para* du groupe pentafluorophényle est substitué.

Ces réactions de substitution nucléophile de type para click sont par exemple décrites par Delaittre *et al.* [1]*.*

Elle peut être plus particulièrement opérée en milieu solvant basique, typiquement formé d'un ou plusieurs solvant(s) polaire(s) aprotique(s), en particulier choisis parmi le tétrahydrofurane (THF), des amides telles que la N,N-diméthylacétamide (DMAc), la N,N-diméthylformamide (DMF), la N-méthyl-2-pyrrolidone (NMP) ; la méthyléthylcétone (MEC), la N-méthyl-2-pyrrolidone et leurs mélanges, de préférence dans le tétrahydrofurane (THF), auxquels est ajoutée au moins une base forte, par exemple un hydroxyde de métal alcalin qui peut être notamment l'hydroxyde de sodium ou de potassium.

Il appartient à l'homme du métier d'ajuster les conditions opératoires pour opérer la réaction de type « para click » pour le greffage des chaînes polymériques latérales, notamment au regard du taux de greffage souhaité.

En particulier, la réaction de greffage peut être opérée à des températures comprises entre 50 °C et 150 °C, en particulier entre 66 °C et 100 °C. La durée de réaction peut être comprise entre 12 heures et 72 heures, en particulier entre 24 heures et 48 heures.

A titre d'exemple, le mélange, comprenant le polymère destiné à former les chaînes latérales du polymère en peigne selon l'invention, le polymère de type PPFS destiné à former la chaîne principale du polymère en peigne selon l'invention, dans le milieu solvant basique, peut être porté à reflux, sous agitation.

Selon une autre variante de réalisation, les chaînes latérales polymériques peuvent être formées en procédant à la polymérisation des chaînes latérales directement au niveau du polymère de type PPFS.

Dans le cadre de cette variante de réalisation, la formation des chaînes latérales polymériques en étape (ii) du procédé de l'invention peut comprendre au moins les étapes suivantes :
(a) substituer les atomes du fluor en position *para* des groupes pentafluorostyrène d'une partie des unités monomériques du polymère de type PPFS par des groupements porteurs d'une fonction hydroxyle (-OH) libre ; et
(b) mettre en contact ledit polymère de type PPFS ainsi fonctionnalisé par des fonctions hydroxyles pendantes avec des monomères précurseurs de la chaîne polymérique latérale, dans des conditions propices à la polymérisation desdits monomères.

Plus particulièrement, dans une première étape (a), une partie des unités monomériques du polymère de type PPFS est modifiée pour greffer en position *para* des groupes pentafluorostyrènes des fonctions hydroxyle (-OH) pendantes.

La fonctionnalisation des unités monomériques par des fonctions hydroxyle peut être plus particulièrement effectuée par réaction de substitution nucléophile, de type « *para*-click » telle que décrite précédemment, en particulier en faisant réagir le polymère de type PPFS destiné à former la chaîne principale du polymère en peigne selon l'invention avec un hydroxyde de métal alcalin, notamment de sodium ou de potassium, et de préférence avec l'hydroxyde de potassium (KOH) ou encore avec un composé de type diol porteur de deux fonctions hydroxyle (-OH) libres.

De préférence, le composé de type diol répond à la formule HO-E-OH, avec E représentant un groupe alkylène en C₁ à C₆. Il peut s'agir par exemple du méthanediol ou de l'éthylène glycol.

Dans une deuxième étape (b), les chaînes latérales polymériques sont polymérisées directement en position *para* des groupes pentafluorostyrène fonctionnalisés en *para* par des fonctions hydroxyles pendantes, en mettant en présence le polymère modifié, obtenu à l'issue de l'étape (a), avec des monomères précurseurs de ladite chaîne polymérique latérale, dans des conditions propices à la polymérisation desdits monomères.

Il appartient à l'homme du métier d'ajuster les conditions opératoires pour procéder à la polymérisation des chaînes latérales pendantes souhaitées. Ainsi, la polymérisation est typiquement opérée en présence d'au moins un catalyseur, par exemple de type alcalin, tel que l'hydroxyde de sodium, de potassium ou carbonate de sodium, pour la croissance de chaînes de POE, ou encore un catalyseur phosphoré, tel que le DPP, pour la polymérisation par ouverture de cycle des monomères de type lactone ou carbonate cyclique, par exemple pour la formation des chaînes latérales pendantes de type PTMC ou PCL.

Les chaînes latérales formées sont ensuite soumises à une réaction de terminaison, en particulier pour une terminaison des chaînes greffées par des groupements R tels que décrits précédemment.

Il est entendu que l'homme du métier est à même d'ajuster les conditions de synthèse, en particulier suivant l'une ou l'autre des variantes précitées, pour obtenir un polymère en peigne présentant les propriétés souhaitées, en particulier telles que décrites précédemment. En particulier, les proportions dudit polymère de type PPFS destiné à former la chaîne principale du polymère en peigne selon l'invention et du polymère ou desdits monomères précurseurs, destiné(s) à former lesdites chaînes polymériques latérales, sont de préférence ajustées de manière à obtenir le taux de greffage molaire en chaînes latérales polymériques souhaité, de préférence compris entre 50 et 95 %.

Le polymère en peigne obtenu à l'issue de la réaction de greffage des polymères destinés à former les chaînes polymériques latérales, en particulier des polymères solvatants, sur les unités monomériques du polymère de type PPFS, peut être soumis à une ou plusieurs étapes de purification, par exemple par précipitation dans l'éther puis dans l'eau.

Le matériau polymérique obtenu, formé des polymères en peigne selon l'invention, se présente avantageusement, à température ambiante, à l'état de solide élastique. Plus particulièrement les polymères en peigne selon l'invention sont agencés sous la forme d'un réseau tridimensionnel de polymères enchevêtrés, présentent un comportement viscoélastique, se traduisant par l'existence d'un plateau caoutchoutique, en particulier pour des températures supérieures à -50°C.

### Electrolyte solide

Comme évoqué précédemment, les polymères en peigne selon l'invention, en particulier présentant des chaînes latérales à base de polymères solvants de sels de métal alcalin ou alcalino-terreux (polymères solvatants), peuvent être mis en œuvre, en combinaison avec au moins un sel ionique, pour former un électrolyte solide, en particulier dans un système électrochimique, notamment dans une batterie au lithium.

Ainsi, l'invention concerne encore, selon un autre de ses aspects, un électrolyte polymérique solide comprenant au moins un polymère en peigne selon l'invention, tel que défini précédemment, en particulier présentant des chaînes latérales à base de polymères solvatants, et au moins un sel de métal alcalin ou alcalino-terreux. En particulier, l'électrolyte polymérique selon l'invention peut être formé d'au moins un polymère en peigne selon l'invention et d'au moins un sel de métal alcalin ou alcalino-terreux.

En particulier, le réseau polymérique formé des polymères en peigne selon l'invention forme plus de 50 % massique, en particulier plus de 75 % massique, de la masse totale dudit électrolyte solide.

De manière avantageuse, le film d'électrolyte polymérique solide selon l'invention est exempt d'agents plastifiants, tels que des carbonates, par exemple le carbonate d'éthylène ou le carbonate de diéthyle.

En particulier, le film d'électrolyte solide selon l'invention est distinct d'un électrolyte de type gélifié, comprenant une quantité majoritaire de plastifiant.

### Préparation de l'électrolyte solide selon l'invention

L'invention concerne encore, selon un autre de ses aspects, un procédé de préparation d'un film d'électrolyte solide, comprenant au moins les étapes suivantes :
(i) mélange d'au moins un polymère en peigne selon l'invention, tel que décrit précédemment, en particulier présentant des chaînes polymériques latérales à base de polymères solvatants, et d'au moins un sel de métal alcalin ou alcalino-terreux, en présence ou non d'un milieu solvant ; et
(ii) formation, en particulier en surface d'un substrat, d'un film à partir dudit mélange.

Le film est plus particulièrement formé en surface d'un substrat adapté, en particulier inerte dans les conditions de formation du film d'électrolyte solide, puis éventuellement désolidarisé dudit substrat pour être mis en œuvre au niveau du système électrochimique auquel il est destiné, en particulier être transféré sur au moins une électrode.

Le substrat peut être de diverses natures. Il peut être en verre, en alumine, en silicone, en polyimide, en polytétrafluroéthylène (PTFE), en polytéréphtalate d'éthylène (PET), en silicone ou encore en polypropylène.

Le sel de métal alcalin ou alcalino-terreux est mis en œuvre avec le polymère en peigne selon l'invention pour assurer la conduction des ions.

Dans le cadre de l'invention, on entend par :
- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium.

A titre d'exemples de sel de lithium, on peut citer le LiPF₆, LiClO₄, LiBF₄, LiAsF₆, LiCF₃SO₃, LiN(C₂F₅SO₂)₂, le bistrifluorométhylsulfonylimide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato)borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, LiTFSI ou LiFSI, de préférence du LiTFSI.

Il appartient à l'homme du métier d'ajuster la quantité en sels de métal alcalin ou alcalino-terreux, notamment au regard de la nature du polymère en peigne, et notamment de la nature des chaînes polymériques latérales portées par le polymère en peigne, mis en œuvre selon l'invention.

Dans le cas de la mise en œuvre d'un polymère peigne porteur de chaînes latérales de type polyalkylène glycol, en particulier polyéthylène glycol, les quantités en polymères en peigne selon l'invention et en sel(s) de lithium peuvent avantageusement être ajustées de manière à ce que le ratio molaire O/Li soit compris entre 6 et 24, avantageusement entre 8 et 16, en particulier entre 14 et 16 et plus particulièrement d'environ 16.

Dans le cas de la mise en œuvre d'un polymère peigne porteur de chaînes latérales formées à partir de monomères de type lactone, en particulier de type poly(ε-caprolactone), les quantités en polymères en peigne selon l'invention et en sel(s) de lithium peuvent avantageusement être ajustées de manière à ce que le ratio molaire CO₂/Li soit compris entre 0,5 et 20, avantageusement entre 1 et 5, en particulier entre 1 et 3 et plus particulièrement d'environ 1.

Dans le cas de la mise en œuvre d'un polymère peigne porteur de chaînes latérales formées à partir de monomères de type carbonate cyclique, en particulier de type poly(triméthylène carbonate), les quantités en polymères en peigne selon l'invention et en sel(s) de lithium peuvent avantageusement être ajustées de manière à ce que le ratio molaire CO₃/Li soit compris entre 0,5 et 20, avantageusement entre 1 et 5, en particulier entre 1 et 3 et plus particulièrement d'environ 1.

Le mélange du polymère en peigne selon l'invention et dudit sel de métal alcalin ou alcalino-terreux est plus particulièrement opéré dans des conditions permettant une bonne dispersion dudit sel de métal alcalin ou alcalino-terreux au niveau du réseau polymérique formé des polymères en peigne selon l'invention. Le mélange peut être opéré en présence ou non d'un solvant.

La préparation d'un film d'électrolyte solide selon l'invention peut ainsi être opérée soit par la voie utilisant un milieu solvant (appelée par la suite « voie solvant »), soit par la voie mettant en œuvre le polymère à l'état fondu, en l'absence de solvant (appelée par la suite « voie fondue »).

Selon une première variante de réalisation, le film d'électrolyte solide est préparé par voie « solvant ».

Dans le cadre de cette variante, le mélange en étape (i) dudit polymère en peigne selon l'invention et du sel de métal alcalin ou alcalino-terreux est plus particulièrement opéré dans un milieu solvant. Le milieu solvant peut être formé d'un ou plusieurs solvants organiques polaires.

A titre d'exemples, ils peuvent être choisis parmi l'acétone, le tétrahydrofurane (THF) et leurs mélanges.

De préférence, le mélange en étape (i) est chauffé à une température inférieure à 100°C. En particulier, le mélange est opéré à une température supérieure ou égale à 25 °C, en particulier comprise entre 40 et 60 °C.

Le film d'électrolyte solide est ensuite formé en étape (ii) *via* au moins les étapes consistant à (ii-a) déposer la formulation de l'étape (i) en surface du substrat, par exemple par enduction, et (ii-b) évaporer le ou lesdits solvants dans des conditions propices à la formation d'un film solide sec.

Par « sec », on entend signifier que le film comprend moins de 5 % massique de solvant, en particulier moins de 2 % massique et plus particulièrement moins de 1 % massique de solvant.

Cette voie de synthèse présente l'avantage d'être simple d'utilisation et de ne pas nécessiter d'appareillage sophistiqué. Toutefois, lorsqu'elle est destinée à être mise en œuvre à grande échelle, cette voie pose des difficultés de gestion quant aux volumes de solvant utilisé et des problèmes de sécurité inhérents aux vapeurs de solvant.

Selon une autre variante de réalisation, le film d'électrolyte solide est préparé en l'absence de solvant, par voie « fondue », notamment par extrusion.

Dans le cadre de cette variante de réalisation, le mélange peut être plus particulièrement opéré par chauffage à une température supérieure à Tg + 30°C, où Tg est la température de transition vitreuse du polymère en peigne.

En particulier, le mélange est opéré à une température supérieure ou égale à - 40 °C, en particulier comprise entre 20°C et 80 °C.

Le mélange à l'état fondu peut ensuite être mis sous la forme d'un film, supporté par un substrat ou autosupporté, par toute technique d'extrusion par voie fondue connue de l'homme du métier.

### Système électrochimique

L'électrolyte solide selon l'invention peut être mis en œuvre dans un système électrochimique, par exemple pour une batterie au lithium.

La présente invention concerne ainsi, selon encore un autre de ses aspects, un système électrochimique comprenant un électrolyte solide selon l'invention.

Le système électrochimique peut être un système générateur, convertisseur ou de stockage électrochimique. Il peut s'agir plus particulièrement d'une pile à combustible, par exemple une pile à combustible à membrane échangeuse de protons (PEMFC) ; une batterie primaire ou secondaire, par exemple une batterie au lithium, sodium, magnésium, potassium ou calcium ; un accumulateur lithium-air, lithium-soufre.

Selon un mode de réalisation particulier, l'électrolyte solide est mis en œuvre dans une batterie, en particulier une batterie au lithium, notamment une batterie lithium-ion ou lithium-métal.

L'électrolyte solide selon l'invention peut être plus particulièrement mis en œuvre comme électrolyte séparateur au sein d'un système électrochimique. On entend par « électrolyte séparateur », un film d'électrolyte solide positionné entre les électrodes positive et négative d'un système électrochimique, et agissant à la fois comme conducteur ionique et séparateur entre les électrodes positive et négative.

L'élaboration du système électrochimique souhaité intégrant l'électrolyte séparateur selon l'invention relève des compétences de l'homme du métier. En particulier, l'ensemble formé des électrodes et du film d'électrolyte solide séparateur peut être obtenu par assemblage des différents éléments et pressage à chaud, par exemple à une température comprise entre 25 et 150 °C.

Le film d'électrolyte solide peur présenter une épaisseur comprise entre 1 et 100 µm, en particulier entre 5 et 50 µm et plus particulièrement d'environ 15 µm.

A titre d'exemple, un accumulateur au lithium peut être formé, de manière classique, par
- deux électrodes, à savoir une électrode positive et une électrode négative. L'électrode positive comprend généralement, en tant que matière électrochimiquement active, des composés lamellaires tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiFePO₄. L'électrode négative comprend généralement, en tant que matière électrochimiquement active, du lithium métal dans le cas des accumulateurs primaires, ou des matériaux d'intercalation tels que le carbone graphite, ou de l'oxyde de titane lithié (Li₄Ti₅O₁₂) dans le cas des accumulateurs basés sur la technologie lithium-ion.
- des collecteurs de courant, généralement en cuivre pour l'électrode négative, ou en aluminium pour l'électrode positive, qui permettent la circulation des électrons, et donc la conduction électronique, dans le circuit extérieur. De préférence, le collecteur de courant pour l'électrode positive est en aluminium protégé contre la corrosion due au sel de lithium, par exemple en aluminium recouvert d'une couche polymérique chargée en carbone.
- l'électrolyte polymérique solide selon l'invention où se produit la conduction ionique qui assure le passage des ions lithium d'une électrode à l'autre, et qui joue également le rôle de séparateur, permettant d'empêcher le contact entre les électrodes positive et négative.

Il peut s'agir en particulier d'une batterie lithium métal, comprenant une anode en lithium métallique et une cathode comprenant au moins une matière active d'électrode positive, entre lesquelles se trouve un électrolyte solide selon l'invention.

L'invention va maintenant être décrite au moyen des exemples et figures suivants, donnés bien entendu à titre illustratif et non limitatif de l'invention.

### Exemple

### Exemple 1

### Préparation du polymère peigne poly(2,3,4,5,6-pentafluorostyrène) porteur de greffons poly(oxyde d'éthylène) ("PPFS₄₉ₖ-g-POE_{0.35k}")

495 mg de poly(2,3,4,5,6-pentafluorostyrène) (noté PPFS) de masse moléculaire moyenne en nombre de 49 kg.mol⁻¹ ; 5,078 g de POE monométhyl éther de 350 g.mol⁻¹ et 380 mg de KOH sont ajoutés dans 20 mL de tétrahydrofurane (THF). Le milieu est agité et porté à reflux pendant 24 heures. Le milieu est ensuite précipité dans l'éther, puis dans l'eau pour obtenir un polymère visqueux de couleur violette.

RMN ¹H: (400 MHz ; THF-d₈ ; 298 K) : δ ppm 2,1 ; 2,5 ; 2,9; 3,3; 3,5; 3,8

RMN ¹⁹F: (400 MHz; THF-d₈ ; 298 K) : δ ppm -144 ;-158 ;-164

D'après le spectre RMN du fluor, le taux de greffage en chaînes pendantes POE est supérieur à 75 %.

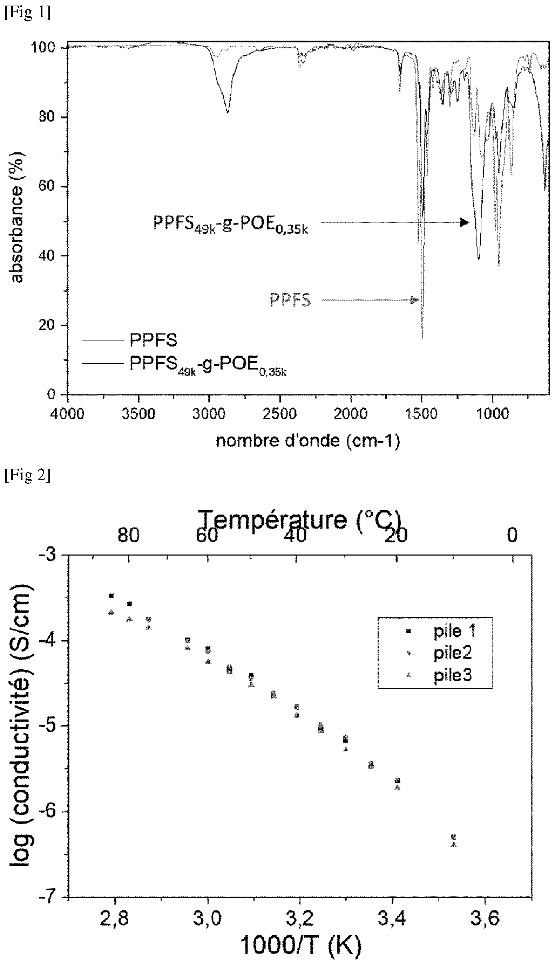

Les spectres infrarouge du PPFS et du polymère peigne PPFS₄₉ₖ-g-POE_{0,35k} sont représentés en figure 1.

### Préparation de l'électrolyte et propriétés électrochimiques

Le polymère visqueux (201,9 mg) est mélangé avec du sel de lithium LiTFSI (46,1 mg) dans l'acétone anhydre à 56°C.

Après évaporation puis séchage, l'électrolyte solide est déposé sur une feuille de lithium métal et incorporé au sein d'une pile bouton symétrique Li/électrolyte/Li pour la détermination de ses propriétés électrochimiques. L'expérience est reproduite pour trois piles boutons identiques.

La figure 2 représente l'évolution de la conductivité ionique en fonction de la température.

Des tests électrochimiques sont effectués en cyclage galvanostatique, à différentes densités de courant par palier de 4 heures à une température de 40°C.

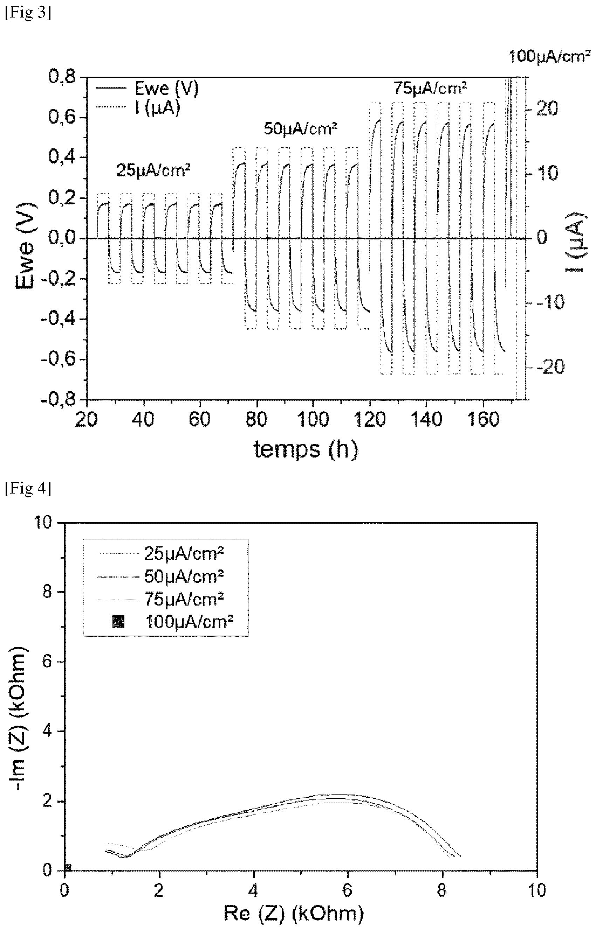

Les courbes de cyclage obtenues avec l'électrolyte à base du polymère en peigne PPFS49k-g-POEo,35k sont représentées en figure 3.

Le comportement électrochimique est également évalué par spectroscopie d'impédance. Les diagrammes de Nyquist obtenus après cyclage, pour des densités de courant variables sont représentés en figure 4. Ils témoignent d'une bonne stabilité des interfaces électrolyte solide/lithium au cours du cyclage et d'un électrodépôt réversible du lithium métal homogène sur la surface de l'électrode au cours du cyclage.

### Exemple 2

### Préparation de polymères peigne poly(2,3,4,5,6-pentafluorostyrène) porteurs de greffons poly(oxyde d'éthylène) ("PPFS-g-POE")

### 2.1. Synthèse du polymère peigne PPFS₄₉ₖ-g-POE_{0.75k}

1,5 mg de PPFS (49 kg.mol⁻¹), 11,5 g de POE monométhyl éther (750 g.mol⁻¹) et 500 mg de KOH sont ajoutés dans 50 ml de THF. Le milieu est agité et porté à reflux pendant 48 heures. Le milieu est ensuite précipité dans l'éther puis dans l'eau pour obtenir un solide présentant un comportement viscoélastique type caoutchouc.

### 2.2. Synthèse du polymère peigne PPFS₃₉ₖ-g-POE_{0.35k}

1,504 g de PPFS (39 kg.mol⁻¹), 5,460 g de POE monométhyl éther (350 g.mol⁻¹) et 583 mg de KOH sont ajoutés dans 50 ml de THF. Le milieu est agité et porté à reflux pendant 48 heures. Le milieu est ensuite précipité dans l'eau pour obtenir un polymère de couleur violette présentant un comportement viscoélastique type caoutchouc.

### 2.3. Synthèse du polymère peigne PPFS₃₉ₖ-g-POE_{0.75k}

1,5006 g de PPFS (39 kg.mol⁻¹), 11,712g de POE monométhyl éther (750 g.mol⁻¹) et 562 mg de KOH sont ajoutés dans 70 ml de THF. Le milieu est agité et porté à reflux pendant 48 heures. Le milieu est ensuite précipité dans l'éther puis dans l'eau pour obtenir un polymère de couleur violette présentant un comportement viscoélastique de type caoutchouc.

### Préparation de l'électrolyte et propriétés électrochimiques

Après mélange physique (dans un vial en verre) de ces polymères avec du LiTFSI (172,6 mg de PPFS₄₉ₖ-g-POE_{0.75k} + 32,1mg de LiTFSI ; 203,2mg de PPFS₃₉ₖ-g-POE_{0.35k} + 41,3 mg de LiTFSI ; 198,3mg de PPFS₃₉ₖ-g-POE_{0.75k} + 38,3mg de LiTFSI) dans l'acétone à chaud (56°C), évaporation du solvant puis séchage, les électrolytes obtenus sont mis en forme (grâce à une presse à chaud (100°C) dans le cas des solides), puis introduits dans une pile bouton symétrique cale (acier inoxydable)/électrolyte/cale (acier inoxydable) pour déterminer leur conductivité par EIS (« Electrochemical Impedance Spectroscopy »).

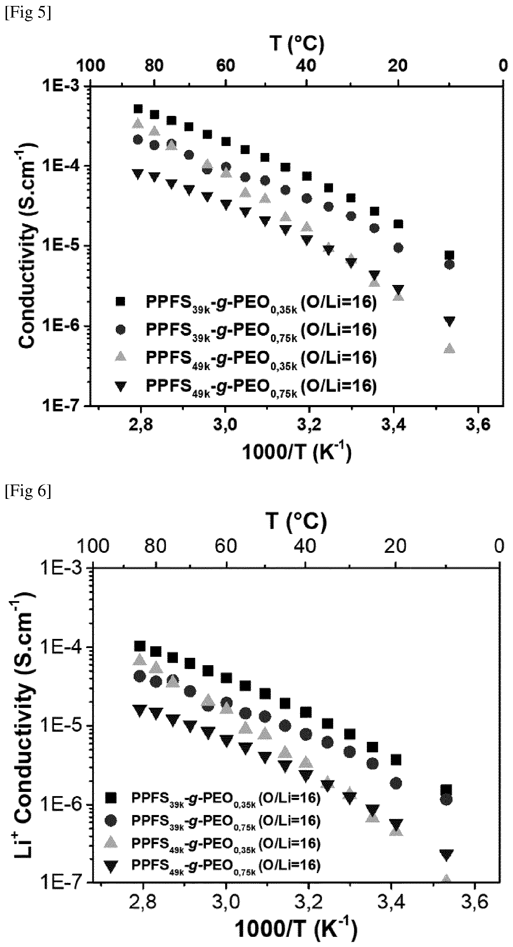

La figure 5 représente l'évolution de la conductivité ionique en fonction de la température pour les électrolytes préparés en exemples 1 et 2.

La figure 6 représente la contribution de l'ion Li⁺ à la conductivité ionique. Cette contribution peut être évaluée à partir du nombre de transport des ions Li⁺, noté t_{Li+}, suivant l'équation σ_{Li+} = σ × t_{Li+}, avec σ_{Li+} la conductivité de l'ion Li⁺ et σ la conductivité totale.

Le nombre de transport du lithium d'un électrolyte peut être déterminée selon la méthode connue de Bruce et Vincent. Il dépend notamment de la nature des chaînes polymériques latérales mises en œuvre au niveau du polymère en peigne de l'invention.

### Exemple 3

### Préparation de polymères peigne poly(2,3,4,5,6-pentafluorostyrène) porteurs de greffons poly(triméthylène carbonate) ("PPFS-g-PTMC")

### 3.1. Synthèse du polymère peigne PPFS₄₉ₖ-g-PTMC₅ₖ

100 mg de PPFS (49 kg.mol⁻¹), 3 g de PTMC (5 kg.mol⁻¹) et 380 mg de KOH sont ajoutés dans 20 ml de THF. Le milieu est agité et porté à reflux pendant 24 heures. Le milieu est ensuite précipité dans l'eau puis purifié par chromatographie d'exclusion stérique semi-préparative.

### 3.2. Synthèse du polymère peigne PPFS₃₉ₖ-g-PTMC_{2,2k}

495 mg de PPFS (39 kg.mol⁻¹), PTMC (2200 g.mol⁻¹) et 380 mg de KOH sont ajoutés dans 20 ml de THF. Le milieu est agité et porté à reflux pendant 24 heures. Le milieu est ensuite précipité dans l'eau puis purifié par chromatographie d'exclusion stérique semi-préparative.

### Préparation de l'électrolyte et propriétés électrochimiques

Après mélange physique de ces polymères avec du LiTFSI dans l'acétone à chaud (641 mg de PPFS₄₉ₖ-g-PTMC₅ₖ+ 136,3 mg de LiTFSI ; 275,5mg de PPFS₃₉ₖ-g-PTMC_{2,2k}+ 55,4 mg de LiTFSI) (56°C), évaporation puis séchage, les électrolytes obtenus sont introduits dans une pile bouton symétrique cale (acier inoxydable)/électrolyte/cale (acier inoxydable) pour déterminer leur conductivité par EIS (« Electrochemical Impedance Spectroscopy »).

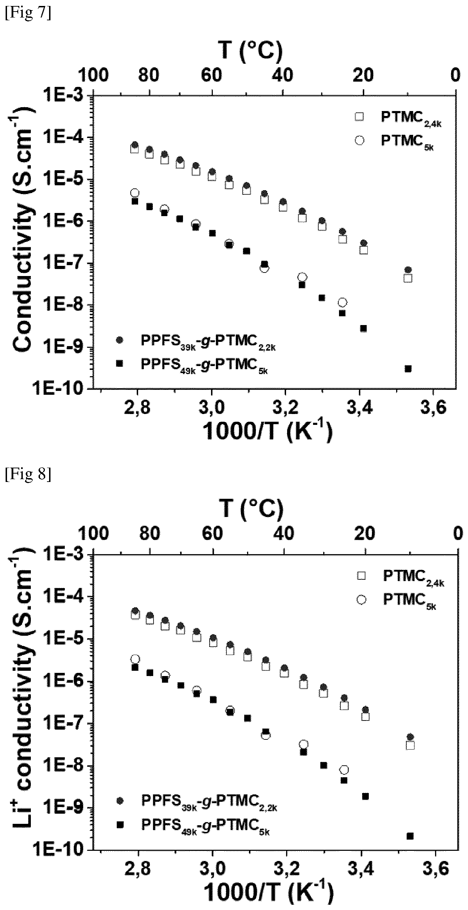

La figure 7 représente l'évolution de la conductivité ionique en fonction de la température pour les électrolytes à base des polymères en peigne PPFS₄₉ₖ-g-PTMC₅ₖ et PPFS39k-g-PTMC2,2k selon l'invention. A titre de comparaison, est également représentée l'évolution de la conductivité ionique en fonction de la température pour des électrolytes à base de PTMC2,4k et de PTMC₅ₖ. La figure 8 représente la contribution de l'ion Li⁺ à la conductivité ionique, évaluée à partir du nombre de transport des ions Li⁺.

### Exemple 4

### Préparation de polymères peigne poly(2,3,4,5,6-pentafluorostyrène) porteurs de greffons poly(oxyde d'éthylène) ("PPFS-g-POE")

### 4.1. Synthèse de PPFS₁₇₀ₖ-g-POE_{0,35k}

Le PPFS (Mₙ = 170 kg.mol⁻¹, D_{w} = 5,2, 1 équivalent en motif PFS), le POE méthyl éther (350 g.mol⁻¹, 1,1 équivalent) et le KOH (1,1 équivalent) sont introduit en solution dans le THF; le milieu est agité et porté à reflux pendant 48 heures. En fin de réaction, le milieu réactionnel est précipité dans l'eau. Le THF est évaporé à l'évaporateur rotatif pour limiter la solubilité du produit dans le milieu de précipitation. La solution est ensuite refroidie puis centrifugée pour séparer l'eau du produit. Le surnageant est ensuite évacué. Cette opération est répétée trois fois. Après séchage (à 100°C pendant 48 heures minimum sous vide primaire dynamique (P ≈ 10⁻¹ mbar)), le copolymère en peigne est obtenu sous la forme d'un solide caoutchouteux de couleur violette.

RMN ¹H (THF, d₅) : δ = 2,0 ppm (s, 2H, (Ar)CH-CH₂-) ; 2,5-2,8 ppm (1H, (Ar)CH-CH₂-) ; 1,9 ppm (s, 3H, O-CH₃) ; 3,6 ppm (4H, O-CH₂CH₂-O) ; 3,8 ppm (2H, CH₂CH₂-O-CH₃) ; 4,3 ppm (2H, Ar-O-CH₂)

RMN ¹⁹F (THF, ds) : δ = -144 ppm (aromatiques *ortho)* ; -158 ppm (aromatique *para* + *meta* de motifs greffés) ; -164 ppm (aromatiques, *meta* des motifs non greffés)

### 4.2. Synthèse de PPFS₁₇₀ₖ-g-POE_{0,55Sk}

Le PPFS (Mₙ = 170 kg.mol⁻¹, D_{w} = 5,2, 1 équivalent en motif PFS), le POE méthyl éther (550 g.mol⁻¹, 1,1 équivalent) et le KOH (1,1 équivalent) sont introduits en solution dans le THF; le milieu est agité et porté à reflux pendant 48 heures. En fin de réaction, le milieu réactionnel est précipité dans l'eau. Le THF est évaporé à l'évaporateur rotatif pour limiter la solubilité du produit dans le milieu de précipitation. La solution est ensuite refroidie puis centrifugée pour séparer l'eau du produit. Le surnageant est ensuite évacué. Cette opération est répétée trois fois. Après séchage (à 100°C pendant 48 heures minimum sous vide primaire dynamique (P ≈ 10⁻¹ mbar)), le copolymère en peigne est obtenu sous la forme d'un solide caoutchouteux de couleur violette.

### 4.3. Synthèse de PPFS₁₇₀ₖ-g-POE_{0,75k}

Le PPFS (Mₙ = 170 kg.mol⁻¹, D_{w} = 5,2, 1 équivalent en motif PFS), le POE méthyl éther (750 g.mol⁻¹, 1,1 équivalent) et le KOH (1,1 équivalent) sont introduit en solution dans le THF; le milieu est agité et porté à reflux pendant 48 heures. En fin de réaction, le milieu réactionnel est précipité dans l'eau. Le THF est évaporé à l'évaporateur rotatif pour limiter la solubilité du produit dans le milieu de précipitation. La solution est ensuite refroidie puis centrifugée pour séparer l'eau de notre produit. Le surnageant est ensuite évacué. Cette opération est répétée trois fois. Après séchage (à 100°C pendant 48 heures minimum sous vide primaire dynamique (P≈ 10⁻¹ mbar)), le copolymère en peigne est obtenu sous la forme d'un solide caoutchouteux de couleur violette.

### Préparation des électrolytes à base de PPFS-g-POE/LiTFSI et propriétés électrochimiques

La préparation des électrolytes est réalisée en boite à gants. Le polymère et le sel sont pesés dans les proportions voulues ([LiTFSI] = 20 % massique), puis dissous dans l'acétone et mélangés. L'acétone est ensuite évaporée, puis l'électrolyte est séché à 100°C sous vide primaire dynamique (P ≈ 10⁻¹ mbar) pendant 48 heures au minimum. Pour extraire les dernières traces d'eau, l'électrolyte est séché pendant une heure à 110°C sous un balayage d'argon.

Les électrolytes obtenus sont mis en forme (grâce à une presse à chaud dans le cas des solides), puis introduits dans une pile bouton (en configuration bloquante) pour déterminer leur conductivité par EIS (« Electrochemical Impedance Spectroscopy »).

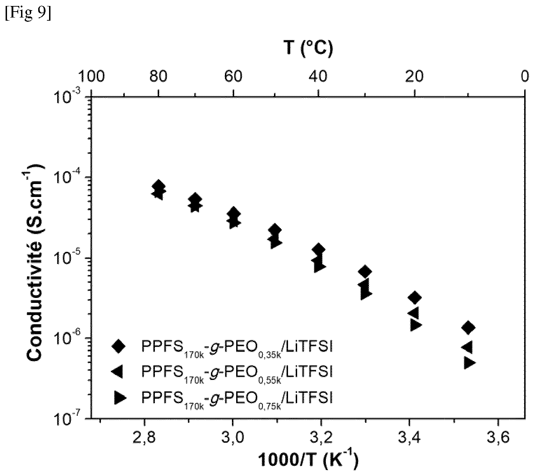

La figure 9 représente l'évolution de la conductivité en fonction de la température pour les électrolytes PPFS-*g*-PEO/LiTFSI à base des polymères en peigne PPFS₁₇₀ₖ-*g*-POE_{0,35k}, PPFS₁₇₀ₖ-g-POE_{0,55k} et PPFS₁₇₀ₖ-g-PEO_{0,75k} selon l'invention.

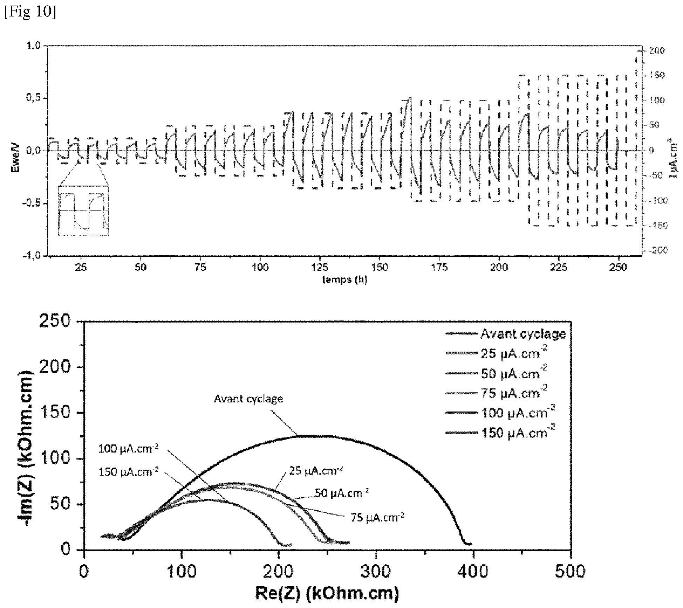

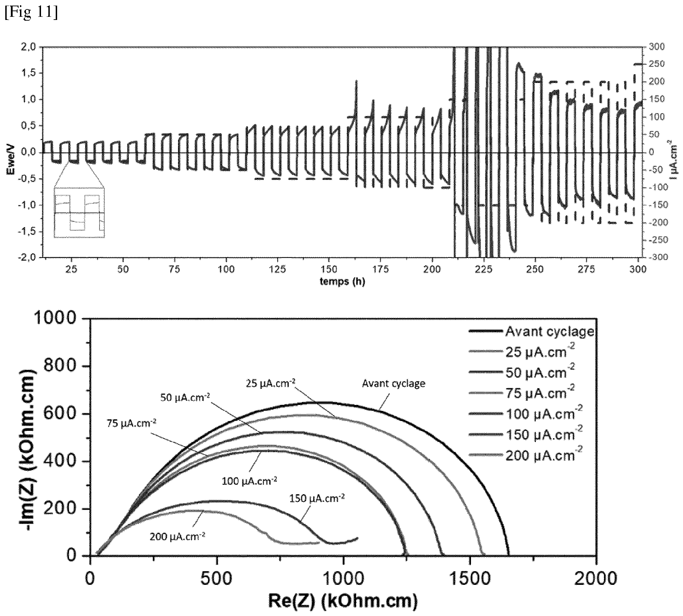

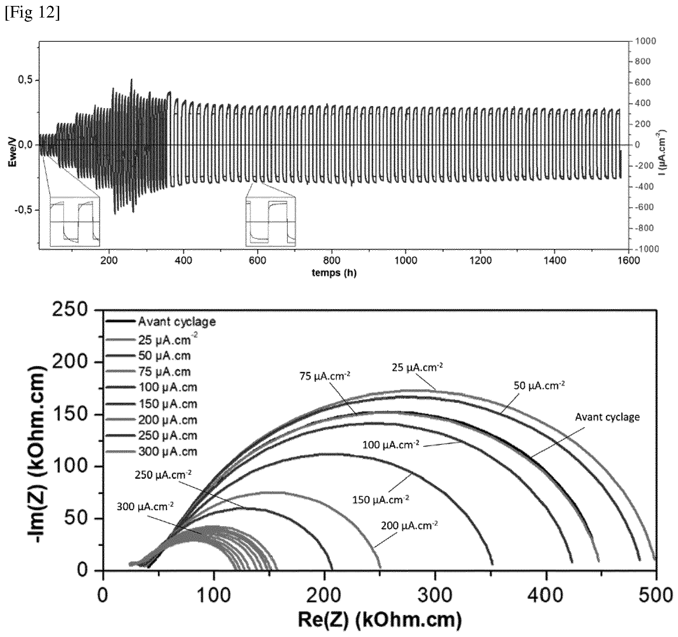

Les figures 10, 11 et 12 présentent les caractérisations en cyclage galvanostatique (GCPL) effectuées en pile bouton symétrique (Li/Li) des électrolytes PPFS-*g*-PEO/LiTFSI et le suivi EIS associé.

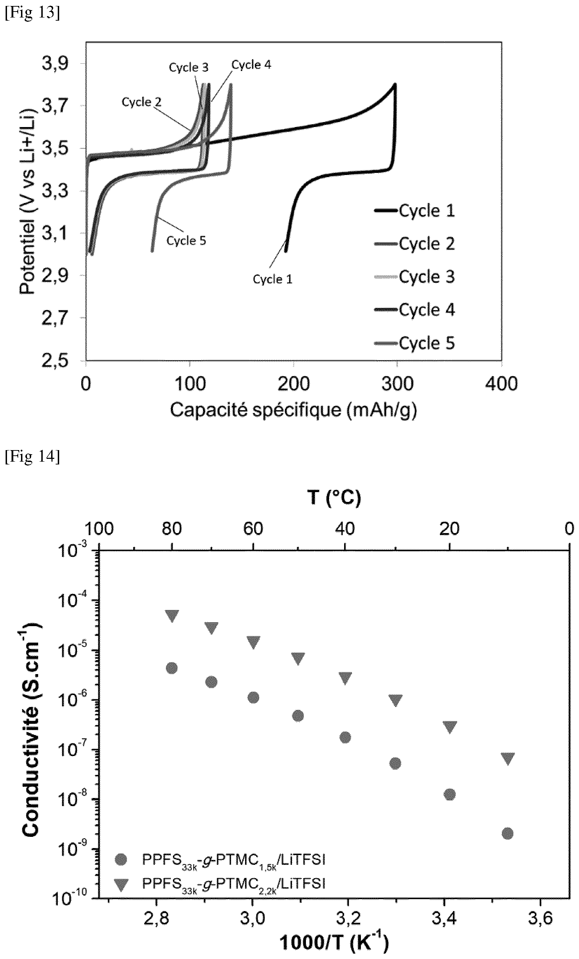

La figure 13 montre le cyclage en cellule complète Li/LFP dont la formulation de l'électrode positive est détaillée en Tableau 1.

**Tableau 1**

| **Matériaux** | **Composition (% massique)** |
|---|---|
| LiFePO₄ (LFP) | 70 |
| Noir de carbone (KB600) | 2 |
| PVDF | 4 |
| Electrolyte ([LiTFSI] = 20 % massique) | 24 |

### Exemple 5

### Préparation de polymères peigne poly(2,3,4,5,6-pentafluorostyrène) porteurs de greffons poly(triméthylène carbonate) ("PPFS-g-PTMC")

### 5.1. Synthèse de PPFS₃₃ₖ-g-PTMC_{1,5k}

Le PTMC (Mₙ = 1,5 kg.mol⁻¹, D_{w} = 1,1, 1,1 équivalent) est dissous dans le THF avant ajout de KOH (1,1 équivalent), suivi de l'addition d'une solution de PPFS (Mₙ = 33 kg.mol⁻¹, D_{w} = 1,9, 1 équivalent) dans le THF. Le milieu réactionnel est porté à reflux pendant 48 heures. En fin de réaction, le milieu réactionnel est précipité une première fois dans l'eau pour évacuer le sel (KF), sous-produit de la réaction. Une SEC préparative est utilisée pour purifier le produit. Après séchage (à 80°C pendant 48 heures minimum sous vide primaire dynamique (P ≈ 10⁻¹ mbar)), le copolymère en peigne est obtenu sous la forme d'un solide blanc.

### 5.2. Synthèse de PPFS₃₃ₖ-g-PTMC_{1.9k}

Le PTMC (Mₙ = 1,9 kg.mol⁻¹, D_{w} = 1,1, 1,1 équivalent) est dissous dans le THF avant ajout de KOH (1,1 équivalent), suivi de l'addition d'une solution de PPFS (Mₙ = 33 kg.mol⁻¹, D_{w} = 1,9, 1 équivalent) dans le THF. Le milieu réactionnel est porté à reflux pendant 48 heures. En fin de réaction, le milieu réactionnel est précipité une première fois dans l'eau pour évacuer le sel (KF), sous-produit de la réaction. Une SEC préparative est utilisée pour purifier le produit. Après séchage (à 80°C pendant 48 heures minimum sous vide primaire dynamique (P ≈ 10⁻¹ mbar)), le copolymère en peigne est obtenu sous la forme d'un polymère fondu transparent qui cristallise lentement au cours du temps (à température ambiante).

### Préparation des électrolytes des PPFS-g-PTMC/LiTFSI

La préparation des électrolytes est réalisée en boite à gants. Le polymère et le sel sont pesés dans les proportions voulues ([LiTFSI] = 20 % massique), puis dissous dans l'acétone et mélangés. L'acétone est ensuite évaporée, puis l'électrolyte est séché à 80°C sous vide primaire dynamique (P ≈ 10⁻¹ mbar) pendant 48 heures au minimum. Pour extraire les dernières traces d'eau, l'électrolyte est séché pendant une heure à 110°C sous un balayage d'argon.

### Caractérisations électrochimiques PPFS-g-PTMC/LiTFSI

Une fois secs, les électrolytes obtenus sont mis en forme (grâce à une presse à chaud dans le cas des solides) puis introduits dans une pile bouton (en configuration bloquante) pour déterminer leur conductivité par EIS (« Electrochemical Impedance Spectroscopy »).

La figure 14 représente l'évolution de la conductivité des électrolytes PPFS-*g*-PTMC/LiTFSI ([LiTFSI] = 20 % massique) en fonction de la température.

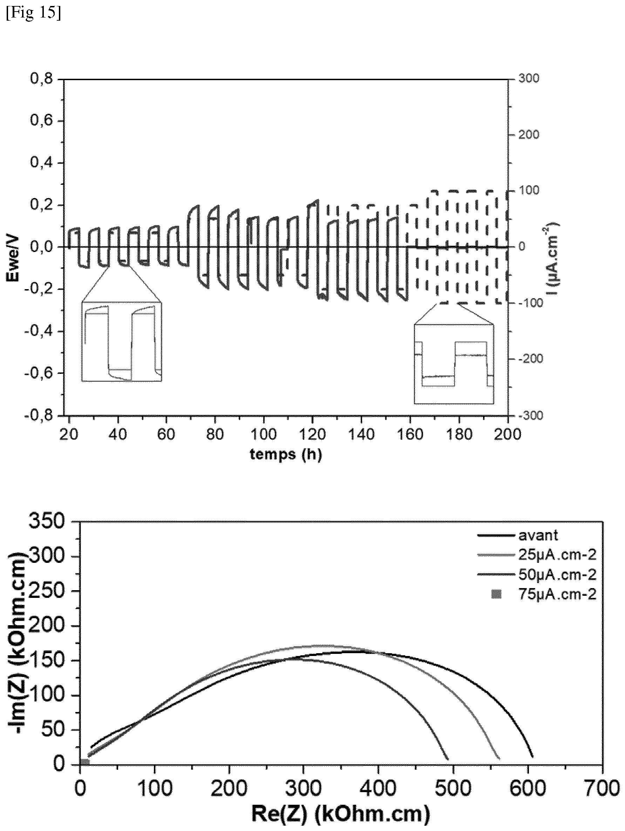

La figure 15 présente la caractérisation en GCPL effectuée en pile bouton symétrique (Li/Li) de l'électrolyte PPFS₃₃ₖ-*g*-PTMC_{1,5k}/LiTFSI et le suivi EIS associé.

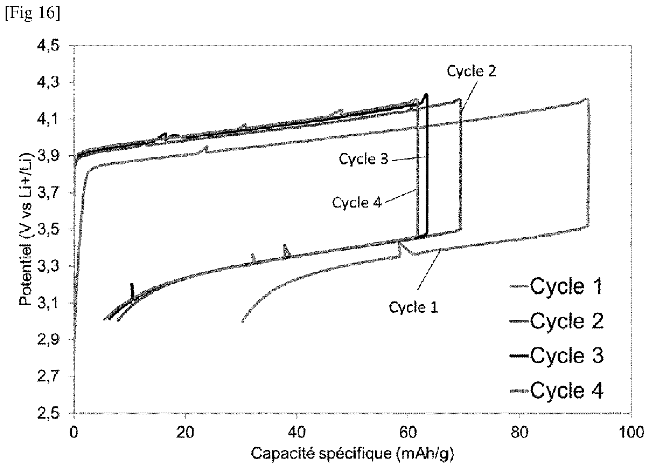

La figure 16 montre le cyclage en cellule complète Li/NMC622 dont la formulation de l'électrode positive est détaillée en Tableau 2.

**Tableau 2**

| **Matériaux** | **Composition (% massique)** |
|---|---|
| LiNi_{0,6}Mn_{0,2}Co_{0,2}O₂ (NMC622) | 70 |
| Noir de carbone (KB600) | 2 |
| PVDF | 4 |
| Electrolyte ([LiTFSI] = 20 % massique) | 24 |

### Liste des documents cités

[1] Delaittre et al., Polym. Chem. 2018, 9, 2679-2684 ;
[2] Bates et al., Macromolecules 2015, 48, 4967-4973 ;
[3] Li et al., Macromolecules 2019, 52, 7234-7243 ;
[4] Makiguchi et al., Macromolecules 2011, 44, 1999-2005 ;
[5] Ott et al., Chem. Commun., 2008, 3516-3518 ;
[6] Cai et al., Polym. Chem., 2012, 3, 1061-1068 ;
[7] Powell et al., Macromolecules 2007, 40, 4509-4515 ;
[8] Pollack et al., ACS Appl. Mater. Interfaces 2014, 6, 19265-29274 ;
[9] Jankova K., Hvilsted S. Macromolecules, 36, 1753-1758, 2003.
[10] Senniger Thierry, Catalyse de polymérisation, 1998 ;
[11] Soga, K. et al., Prog. Polym. Sci. 22, 1503-1546, 1997 ;
[12] Huang, J. et al., Prog. Polym. Sci. 20, 459-526, 1995.

## Revendications

1. Polymère en peigne comprenant une chaîne principale formée à partir de monomères 1-éthényl- et/ou 1-allyl- 2,3,4,5,6-pentafluorobenzène et des chaînes latérales polymériques greffées *en para* des groupes pentafluorophényle, dans lequel lesdites chaînes polymériques latérales sont liées à ladite chaîne principale par un atome d'oxygène, le taux de greffage molaire en chaînes latérales polymériques étant supérieur ou égal à 50 %.

2. Polymère en peigne selon la revendication 1, dans lequel le taux de greffage molaire en chaînes latérales polymériques est inférieur ou égal à 99 %, de préférence compris entre 50 et 95 %.

3. Polymère en peigne selon la revendication 1 ou 2, dans lequel ladite chaîne principale est formée d'un poly(2,3,4,5,6-pentafluorostyrène).

4. Polymère en peigne selon l'une quelconque des revendications précédentes, dans lequel ladite chaîne principale présente un degré de polymérisation moyen en nombre, supérieur ou égal à 50, en particulier compris entre 50 et 4 200 et plus particulièrement compris entre 50 et 520.

5. Polymère en peigne selon l'une quelconque des revendications précédentes, dans lequel lesdites chaînes latérales polymériques présentent un degré de polymérisation moyen en nombre supérieur ou égal à 4, en particulier compris entre 5 et 1000, notamment compris entre 5 et 500 et plus particulièrement compris entre 5 et 100.

6. Polymère en peigne selon l'une quelconque des revendications précédentes, ledit polymère présentant des unités monomériques greffées de formule (I') suivante : 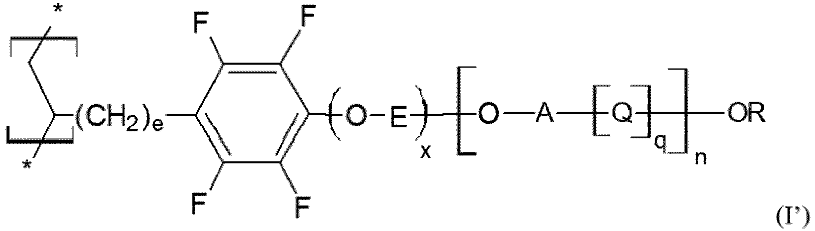 dans laquelle :
e vaut 0 ou 1 ;
x vaut 0 ou 1 ;
E représente un groupe alkylène en C₁ à C₆, en particulier en C₁ ou C₂ ;
A représente un groupe alkylène, linéaire ou ramifié, en C₂ à C₁₁, en particulier un groupe - (CH₂)ₚ- avec p un nombre entier compris entre 2 et 11, en particulier compris entre 2 et 5;
Q représente un groupe oxycarbonyl -OC(O)- ou carbonyl -C(O)- ;
q vaut 0 ou 1 ;
n est un nombre entier positif, en particulier n est supérieur ou égal à 4, en particulier compris entre 5 et 1000, notamment compris entre 5 et 500 et plus particulièrement compris entre 5 et 100 ;
et R représente un groupement non réactif, en particulier R représente un groupe alkyle, linéaire ou ramifié, pouvant être substitué par des groupements mono- ou polycycliques ou mono- ou polyhétérocycliques, condensés ou non, saturés ou insaturés, aromatiques ou non ;
ou un groupe mono- ou polycyclique ou mono- ou polyhétérocyclique, condensé ou non, saturé ou insaturé, aromatique ou non; le groupe alkyle et/ou le ou lesdits groupements mono- ou poly(hétéro)cyliques pouvant éventuellement être substitués par un ou plusieurs atomes de fluor.

7. Polymère en peigne selon l'une quelconque des revendications précédentes, ledit polymère étant de formule (II') : 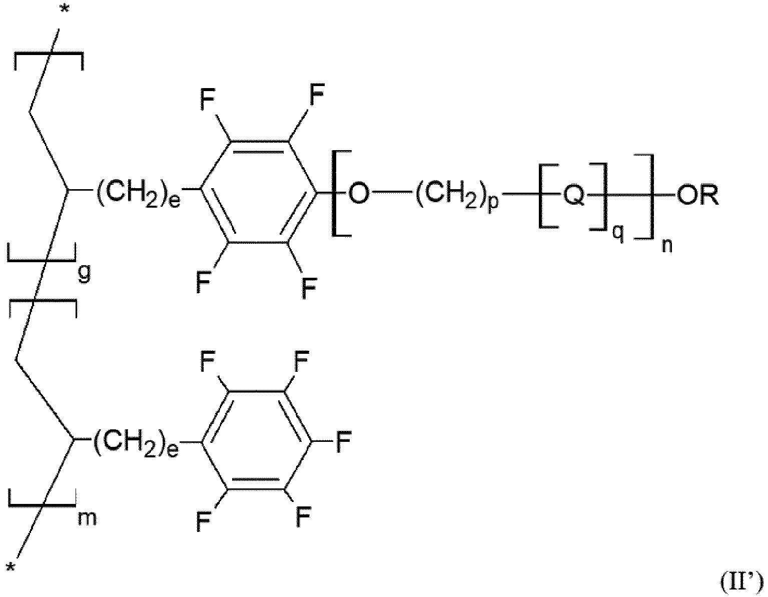
dans laquelle e, p, q, Q, n et R sont tels que définis en revendication 6, g correspond au nombre moyen d'unités monomériques porteuses des chaînes latérales polymériques ; et
m correspond au nombre moyen d'unités monomériques non greffées ; avec g/(g+m), représentant le taux de greffage molaire en chaînes latérales polymériques, étant supérieur ou égal à 0,50 et inférieur ou égal à 0,99, en particulier compris entre 0,50 et 0,95 ;
l'ordre de succession des deux types d'unités monomériques formant le polymère de formule (II') étant totalement aléatoire.

8. Polymère en peigne selon l'une quelconque des revendications précédentes, dans lequel lesdites chaînes latérales sont des chaînes de polyalkylène glycol, en particulier poly(oxyde d'éthylène) ; ou formées à partir d'au moins un monomère cyclique choisi parmi les lactones et les carbonates cycliques de cinq à huit chaînons, et en particulier des chaînes latérales de type poly(triméthylène carbonate) ou poly(ε-caprolactone).

9. Procédé de préparation d'un polymère en peigne tel que défini selon l'une quelconque des revendications 1 à 8, comprenant au moins les étapes consistant en :
(i) disposer d'un polymère formé à partir de monomères 1-éthényl- et/ou 1-allyl- 2,3,4,5,6-pentafluorobenzène, dit polymère de type PPFS, destiné à former la chaîne principale du polymère en peigne ; et
(ii) former les chaînes latérales polymériques en position *para* d'une partie des groupements pentafluorophényle des unités monomériques dudit polymère de type PPFS.

10. Procédé selon la revendication précédente, dans lequel ledit polymère de type PPFS en étape (i) est formé par polymérisation à partir du mélange d'un système catalytique de type Ziegler Natta comprenant un catalyseur et un co-catalyseur ; et de monomères 1-éthényl- et/ou 1-allyl- 2,3,4,5,6-pentafluorobenzène.

11. Procédé selon la revendication 9 ou 10, dans lequel les chaînes latérales sont formées en étape (ii) par greffage, en position *para* d'une partie des groupements pentafluorophényle des unités monomériques du polymère de type PPFS, de polymères, destinés à former les chaînes polymériques latérales du polymère en peigne, préalablement synthétisés.

12. Procédé selon la revendication précédente, dans lequel la formation des chaînes latérales polymériques en étape (ii) est opérée par mise en contact dudit polymère de type PPFS avec au moins un polymère destiné à former les chaînes polymériques latérales du polymère en peigne, et présentant à l'une de ses extrémités une fonction hydroxyle libre, dans des conditions propices au greffage dudit polymère en position *para* d'un groupement pentafluorophényle, en particulier par réaction de substitution nucléophile de type para-click entre la fonction hydroxyle portée par ledit polymère et l'atome de fluor en position *para* du groupe pentafluorophényle.

13. Procédé selon la revendication 9 ou 10, dans lequel les chaînes latérales sont formées en étape (ii) en procédant à la polymérisation des chaînes latérales directement au niveau du polymère de type PPFS.

14. Procédé selon la revendication précédente, dans lequel la formation des chaînes latérales polymériques en étape (ii) du procédé de l'invention comprend au moins les étapes suivantes :
(a) substituer les atomes du fluor en position *para* des groupes pentafluorostyrène d'une partie des unités monomériques dudit polymère de type PPFS par des groupements porteurs d'une fonction hydroxyle libre ; et
(b) mettre en contact ledit polymère de type PPFS ainsi fonctionnalisé par des fonctions hydroxyles pendantes avec des monomères précurseurs de la chaîne polymérique latérale, dans des conditions propices à la polymérisation desdits monomères.

15. Utilisation d'un polymère en peigne tel que défini selon l'une quelconque des revendications 1 à 8 ou obtenu par le procédé selon l'une quelconque des revendications 9 à 14, dans lequel les chaînes latérales polymériques sont à base de polymères solvants de sels de métal alcalin ou alcalino-terreux, pour former, en combinaison avec au moins un sel de métal alcalin ou alcalino-terreux, un électrolyte polymérique solide dans un système électrochimique, en particulier dans une batterie au lithium.

## Patentansprüche

1. Kammpolymer, umfassend eine Hauptkette, die aus 1-Ethenyl- und/oder 1-Allyl-2,3,4,5,6-pentafluorbenzol-Monomeren gebildet ist, und polymere Seitenketten, die in para-Position von Pentafluorphenylgruppen gepfropft sind, wobei die polymeren Seitenketten an die Hauptkette über ein Sauerstoffatom gebunden sind, wobei der molare Pfropfungsgrad von polymeren Seitenketten mehr als oder gleich 50 % beträgt.

2. Kammpolymer nach Anspruch 1, wobei der molare Pfropfungsgrad von polymeren Seitenketten weniger als oder gleich 99 %, vorzugsweise zwischen 50 und 95 % beträgt.

3. Kammpolymer nach Anspruch 1 oder 2, wobei die Hauptkette aus einem Poly(2,3,4,5,6-pentafluorstyrol) hergestellt ist.

4. Kammpolymer nach einem der vorhergehenden Ansprüche, wobei die Hauptkette einen zahlenmittleren Polymerisationsgrad von mehr als oder gleich 50, insbesondere zwischen 50 und 4.200 und ganz besonders zwischen 50 und 520 aufweist.

5. Kammpolymer nach einem der vorhergehenden Ansprüche, wobei die polymeren Seitenketten einen zahlenmittleren Polymerisationsgrad von mehr als oder gleich 4, insbesondere zwischen 5 und 1000, besonders zwischen 5 und 500 und ganz besonders zwischen 5 und 100 aufweisen.

6. Kammpolymer nach einem der vorhergehenden Ansprüche, wobei das Polymer gepfropfte Monomereinheiten der folgenden Formel (I') aufweist: 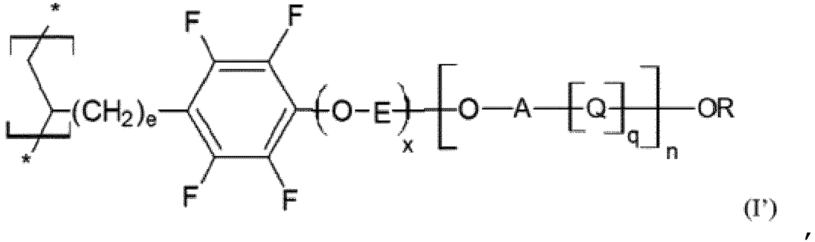 worin:
e den Wert 0 oder 1 hat;
x den Wert 0 oder 1 hat;
E eine C₁- bis C₆-, insbesondere C₁- oder C₂-Alkylengruppe darstellt;
A eine gerade oder verzweigte C₂- bis C₁₁-Alkylengruppe, insbesondere eine Gruppe -(CH₂)ₚ- darstellt, wobei p eine ganze Zahl zwischen 2 und 11, insbesondere zwischen 2 und 5 ist;
Q eine Oxycarbonylgruppe -OC(O)- oder Carbonylgruppe -C(O)- darstellt;
q den Wert 0 oder 1 hat;
n eine positive ganze Zahl ist, insbesondere n größer oder gleich 4 ist, insbesondere zwischen 5 und 1000, besonders zwischen 5 und 500 und ganz besonders zwischen 5 und 100 beträgt;
und R eine nicht reaktive Gruppe darstellt, R insbesondere eine gerade oder verzweigte Alkylgruppe, die mit kondensierten oder nicht kondensierten, gesättigten oder ungesättigten, aromatischen oder nicht aromatischen mono- oder polyzyklischen oder mono- oder polyheterozyklischen Gruppen substituiert sein kann, oder eine kondensierte oder nicht kondensierte, gesättigte oder ungesättigte, aromatische oder nicht aromatische mono- oder polyzyklische oder mono- oder polyheterozyklische Gruppe darstellt, wobei die Alkylgruppe und/oder die mono- oder poly(hetero)zyklische(n) Gruppe(n) gegebenenfalls mit einem oder mehreren Fluoratomen substituiert sein kann bzw. können.

7. Kammpolymer nach einem der vorhergehenden Ansprüche, wobei das Polymer die Formel (II') hat: 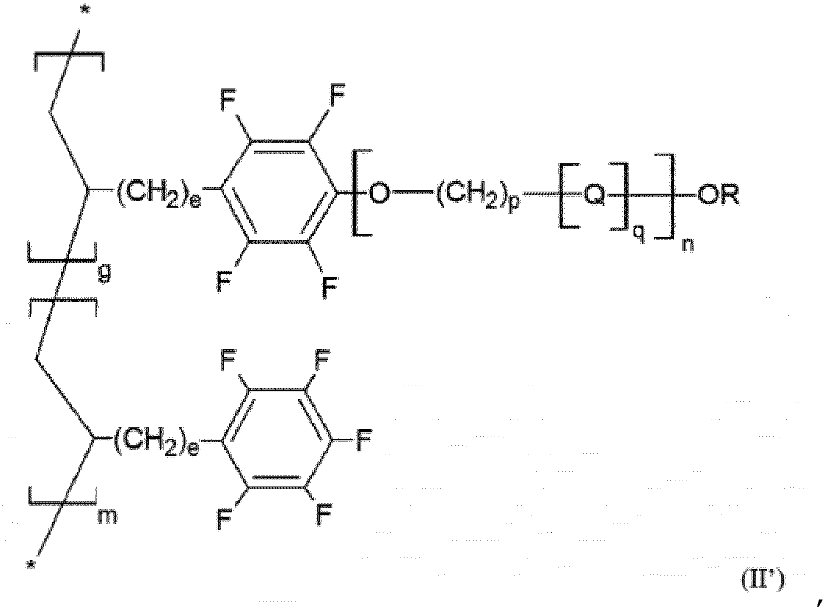
worin e, p, q, Q, n und R wie in Anspruch 6 definiert sind, g der mittleren Anzahl an Monomereinheiten, die polymere Seitenketten tragen, entspricht und
m der mittleren Anzahl an nicht gepfropften Monomereinheiten entspricht;
wobei g/(g+m), das den molaren Pfropfungsgrad mit polymeren Seitenketten darstellt, mehr als oder gleich 0,50 und weniger als oder gleich 0,99, insbesondere zwischen 0,50 und 0,95 beträgt;
wobei die Reihenfolge der beiden Typen von Monomereinheiten, die das Polymer der Formel (II') bilden, vollständig zufallsgemäß ist.

8. Kammpolymer nach einem der vorhergehenden Ansprüche, wobei die Seitenketten Polyalkylenglykol-, insbesondere Poly(ethylenoxid)-Ketten sind oder aus mindestens einem zyklischen Monomer, ausgewählt aus Lactonen und zyklischen Carbonaten mit fünf bis acht Ringgliedern gebildet sind und insbesondere Seitenketten des Poly(trimethylencarbonat)- oder Poly(ε-caprolacton)-Typs sind.

9. Verfahren zur Herstellung eines Kammpolymers nach einem der Ansprüche 1 bis 8, das mindestens die folgenden Schritte umfasst:
(i) Bereitstellen eines Polymers, das aus 1-Ethenyl-und/oder 1-Allyl-2,3,4,5,6-pentafluorbenzol-Monomeren gebildet ist, d. h. eines Polymers des PPFS-Typs, das die Hauptkette des Kammpolymers bilden soll; und
(ii) Herstellen der polymeren Seitenketten in *para-*Position eines Teils der Pentafluorphenylgruppen der Monomereinheiten des Polymers des PPFS-Typs.

10. Verfahren nach dem vorhergehenden Anspruch, wobei das Polymer des PPFS-Typs in Schritt (i) durch Polymerisation ausgehend von einem Gemisch aus einem katalytischen System des Ziegler-Natta-Typs, das einen Katalysator und einen Co-Katalysator umfasst, und 1-Ethenyl- und/oder 1-Allyl-2,3,4,5,6-Pentafluorbenzol-Monomeren hergestellt wird.

11. Verfahren nach Anspruch 9 oder 10, wobei die Seitenketten in Schritt (ii) durch Pfropfen von zuvor synthetisierten Polymeren, die die polymeren Seitenketten des Kammpolymers bilden sollen, in *para-*Position eines Teils der Pentafluorphenylgruppen der Monomereinheiten des Polymers des PPFS-Typs hergestellt werden.

12. Verfahren nach dem vorhergehenden Anspruch, wobei die Herstellung der polymeren Seitenketten in Schritt (ii) durch Inkontaktbringen des Polymers des PPFS-Typs mit mindestens einem Polymer, das die polymeren Seitenketten des Kammpolymers bilden soll und an einem seiner Enden eine freie Hydroxylfunktion aufweist, unter Bedingungen, die die Pfropfung des Polymers in *para-*Position einer Pentafluorphenylgruppe begünstigen, und insbesondere durch nukleophile Substitutionsreaktion des para-Klick-Typs zwischen der von dem Polymer getragenen Hydroxylfunktion und dem Fluoratom in para-Position der Pentafluorphenylgruppe durchgeführt wird.

13. Verfahren nach Anspruch 9 oder 10, wobei die Seitenketten in Schritt (ii) mittels Durchführen der Polymerisation der Seitenketten direkt an das Polymer des PPFS-Typs gebildet werden.

14. Verfahren nach dem vorhergehenden Anspruch, wobei die Herstellung der Seitenketten in Schritt (ii) des Verfahrens der Erfindung mindestens die folgenden Schritte umfasst:
(a) Substituieren der Fluoratome der Pentafluorstyrolgruppen eines Teils der Monomereinheiten des Polymers des PPFS-Typs in para-Position durch Gruppen, die eine freie Hydroxylfunktion tragen; und
(b) Inkontaktbringen des so mit anhängenden Hydroxylfunktionen funktionalisierten Polymers des PPFS-Typs mit den Vorläufermonomeren für die polymere Seitenkette unter Bedingungen, die die Polymerisation der Monomere begünstigen.

15. Verwendung eines Kammpolymers nach einem der Ansprüche 1 bis 8 oder erhalten durch das Verfahren nach einem der Ansprüche 9 bis 14, wobei die polymeren Seitenketten auf Lösungspolymeren von Alkali- oder Erdalkalimetallsalzen basieren, um in Kombination mit mindestens einem Alkali- oder Erdalkalimetallsalz einen polymeren Festelektrolyten in einem elektrochemischen System, insbesondere in einer Lithiumbatterie, herzustellen.

## Claims

1. Comb polymer comprising a main chain formed from 1-ethenyl- and/or 1-allyl-2,3,4,5,6-pentafluorobenzene monomers and polymeric side chains grafted in the *para* position of the pentafluorophenyl groups, in which said polymeric side chains are linked to said main chain by an oxygen atom, the molar grafting rate of polymeric side chains being greater than or equal to 50%.

2. Comb polymer according to Claim 1, in which the molar grafting rate of polymeric side chains is less than or equal to 99% and preferably between 50 and 95%.

3. Comb polymer according to Claim 1 or 2, in which said main chain is formed of a poly (2, 3, 4, 5, 6-pentafluorostyrene) .

4. Comb polymer according to any one of the preceding claims, in which said main chain has a number-average degree of polymerization of greater than or equal to 50, in particular between 50 and 4,200 and more particularly between 50 and 520.

5. Comb polymer according to any one of the preceding claims, in which said polymeric side chains have a number-average degree of polymerization of greater than or equal to 4, in particular between 5 and 1,000, especially between 5 and 500 and more particularly between 5 and 100.

6. Comb polymer according to any one of the preceding claims, said polymer having grafted monomer units of the following formula (I'): 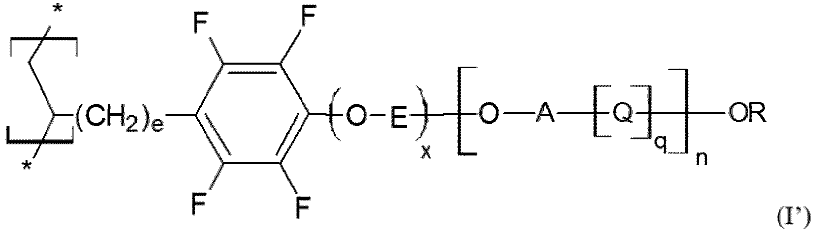 in which:
e has the value 0 or 1;
x has the value 0 or 1;
E represents a C₁ to C₆ and in particular C₁ or C₂ alkylene group;
A represents a linear or branched C₂ to C₁₁ alkylene group,
in particular a group -(CH₂)ₚ- with p being an integer between 2 and 11 and in particular between 2 and 5;
Q represents an oxycarbonyl -OC(O)- or carbonyl -C(O)-group;
q has the value 0 or 1;
n is a positive integer, in particular n is greater than or equal to 4, in particular between 5 and 1,000,
especially between 5 and 500 and more particularly between 5 and 100;
and R represents a non-reactive group, in particular R represents a linear or branched alkyl group which may be substituted by fused or unfused, saturated or unsaturated or aromatic or non-aromatic mono- or polycyclic or monoor polyheterocyclic groups; or a fused or unfused, saturated or unsaturated or aromatic or non-aromatic mono- or polycyclic or mono- or polyheterocyclic group;
the alkyl group and/or said mono- or poly(hetero)cyclic group(s) optionally possibly being substituted by one or more fluorine atoms.

7. Comb polymer according to any one of the preceding claims, said polymer being of formula (II'): 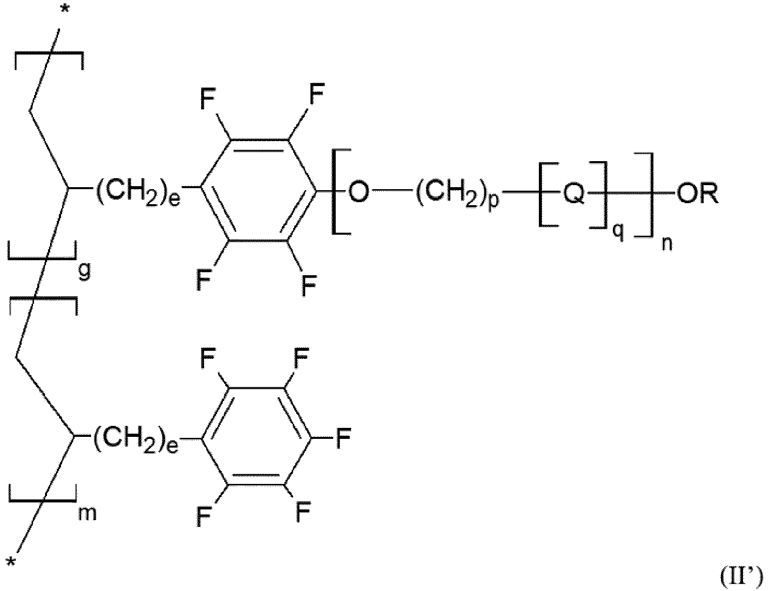
in which e, p, q, Q, n and R are as defined in Claim 6, g corresponds to the average number of monomer units bearing polymeric side chains; and m corresponds to the average number of ungrafted monomer units;
with g/(g+m), which represents the molar grafting rate of polymeric side chains, being greater than or equal to 0.50 and less than or equal to 0.99 and in particular between 0.50 and 0.95;
the order of succession of the two types of monomer units forming the polymer of formula (II') being completely random.

8. Comb polymer according to any one of the preceding claims, in which said side chains are polyalkylene glycol, in particular poly(ethylene oxide), chains; or are formed from at least one cyclic monomer selected from five- to eight-membered lactones and cyclic carbonates and in particular side chains of the poly(trimethylene carbonate) or poly(ε-caprolactone) type.

9. Method for the preparation of a comb polymer as defined in any one of Claims 1 to 8, comprising at least the steps consisting in:
(i) providing a polymer formed from 1-ethenyl- and/or 1-allyl-2,3,4,5,6-pentafluorobenzene monomers, known as PPFS type polymer, intended for forming the main chain of the comb polymer; and
(ii) forming the polymeric side chains in the *para* position of a proportion of the pentafluorophenyl groups of the monomer units of said PPFS type polymer.

10. Method according to the preceding claim, in which said PPFS type polymer in step (i) is formed by polymerization from the mixture of a Ziegler-Natta type catalytic system comprising a catalyst and a co-catalyst and of 1-ethenyl- and/or 1-allyl-2,3,4,5,6-pentafluorobenzene monomers.

11. Method according to Claim 9 or 10, in which the side chains are formed in step (ii) by grafting polymers intended for forming the previously synthesized polymeric side chains of the comb polymer in the *para* position of a proportion of the pentafluorophenyl groups of the monomer units of the PPFS type polymer.

12. Method according to the preceding claim, in which the polymeric side chains are formed in step (ii) by contacting said PPFS type polymer with at least one polymer which is intended for forming the polymeric side chains of the comb polymer and has at one of the extremities thereof a free hydroxyl function under conditions favorable to grafting said polymer in the *para* position of a pentafluorophenyl group, in particular by a nucleophilic substitution reaction of the *para* click type between the hydroxyl function borne by said polymer and the fluorine atom in the *para* position of the pentafluorophenyl group.

13. Method according to Claim 9 or 10, in which the side chains are formed in step (ii) by carrying out the polymerization of the side chains directly at the level of the PPFS type polymer.

14. Method according to the preceding claim, in which the formation of the polymeric side chains in step (ii) of the method of the invention comprises at least the following steps:
(a) substituting the fluorine atoms in the *para* position of the pentafluorostyrene groups of a proportion of the monomer units of said PPFS type polymer by groups bearing a free hydroxyl function; and
(b) contacting said PPFS type polymer functionalized in this manner by pendant hydroxyl functions with precursor monomers of the polymeric side chain under conditions favorable to the polymerization of said monomers.

15. Use of a comb polymer as defined in any one of Claims 1 to 8 or obtained by the method according to any one of Claims 9 to 14, in which the polymeric side chains are based on solvent polymers of salts of an alkali metal or alkaline-earth metal, in order to form, in combination with at least one salt of an alkali metal or alkaline-earth metal, a solid polymer electrolyte in an electrochemical system, in particular in a lithium battery.
